# EUROPEAN PATENT APPLICATION

(11) **EP 2 106 905 A2**
(43) Date of publication of application: **07.10.2009**
(21) Application number: 09156367.6
(22) Date of filing: 26.03.2009
(51) Int. Cl.: B32B 37/10

(54) **Stacked laminator**

(30) Priority: 01.04.2008 JP 2008095465
(71) Applicant: Nisshinbo Industries, Inc., Tokyo 103-8650 (JP)
(72) Inventor: Ishikawa, Akihiko, Okazaki-city Aichi 444-8560 (JP); Muramatsu, Toshihiro, Okazaki-city Aichi 444-8560 (JP)
(74) Representative: Jannig, Peter

(57) **Abstract**

A stacked laminator comprising multiple vertically stacked laminating units provides a more compact laminator and improves the efficiency with which workpieces are produced. The plurality of vertically stacked laminating units 10, with each including an upper chamber 13a and a lower chamber 11a upon which the upper chamber is set, a heating plate 11b provided to the lower chamber 11a upon which the workpiece is set, and a pressing member 13b provided in the upper chamber 13a. The workpiece is set on the heating plate 11b, pressed between the heating plate 11b and the pressing member 13b, and laminated. The laminator further comprises opening and closing devices for opening and closing each of the laminating units one after another in succession. Each laminating unit can perform laminating independently of the other laminating units.

## Description

### CLAIM FOR PRIORITY

The present specification claims priority pursuant to 35 U.S.C. §119 from Japanese Patent Application No. 2008-95465, filed on April 1, 2008 in the Japan Patent Office, the entire contents of which are hereby incorporated by reference herein.

### BACKGROUND

### FIELD OF THE INVENTION

The present invention relates to a stacked laminator including a plurality of vertically stacked laminating units for disposing a workpiece such as a photovoltaic module on a heating plate, compressing the workpiece heated by the heating plate between the heating plate and a pressing member, and laminating the workpiece.

### DESCRIPTION OF THE BACKGROUND ART

Recently, photovoltaic devices have attracted attention as an environmentally clean alternative to greenhouse gas-emitting energy sources. The photovoltaic modules that constitute the photovoltaic devices are themselves constituted of a plurality of laminated members, including a cover glass, a filler material (hereinafter "filler"), a photovoltaic cell, a backside material and so forth. When manufacturing this type of photovoltaic device, a laminator is used. A laminator is a machine that stacks the constituent members of the photovoltaic device on top of each other and laminates them while heating them in a vacuum to cause these elements to adhere to each other. The laminating process is one that requires more time than any other stage in the manufacture of a photovoltaic module. Therefore, in order to produce the required number of photovoltaic modules, it is necessary to have multiple laminators on a single production line. In addition, as photovoltaic modules have grown in size, so too have the laminators that produce them. However, in this case, as the amount of space needed for the laminators on the production line increases, ways must be found to improve throughput (production capacity per unit of time) per unit area of production equipment.

Accordingly, in Japanese Patent Application Laid-open Publication No. Hei 9-141743 (JP-H09-141743-A), in order to reduce the space needed for installation of the laminators that account for a large proportion of the photovoltaic module production line equipment area and to improve throughput per unit area of production equipment, a laminator is disclosed that vertically stacks two laminating units for laminating one on top of the other in a two-level configuration.

The laminator disclosed in JP-H09-141743-A is provided with a top laminating unit and a bottom laminating unit. The top laminating unit is composed of a first upper chamber provided within an upper case and a first lower chamber provided in an upper part of a middle case. The bottom laminating unit is composed of a second upper chamber provided in a lower part of the middle case and a second lower chamber provided in a lower case.

When carrying out the laminating process, photovoltaic device panels are set on both a top table and a bottom table of a conveyance means provided at the side of the laminating units. Then, by running a running unit mounted on the bottom of the laminator, the photovoltaic panel set on the top table can be conveyed into the top laminating units and the photovoltaic panel set on the bottom table is conveyed into the bottom laminating unit. Subsequently, piston rods of cylinders provided in the middle case are contracted, lowering the upper case and raising the lower case so that the top laminating unit and the bottom laminating unit are sealed together.

After laminating is performed in that sealed state, the piston rods of the cylinders are expanded raising the upper case and lowering the lower case, such that the top laminating unit and the bottom laminating unit can be opened. The photovoltaic panels in the top laminating unit and the bottom laminating unit are then transferred onto top and bottom tables of the conveyance means provided at the side of the top laminating unit. By running the running unit mounted on the bottom of the laminator, the photovoltaic panels set on the top table and the bottom table can be conveyed from the laminator. In this manner, the laminator according to JP-H09-141743-A carries out the laminating process using the top laminating unit and the bottom laminating unit simultaneously, in an effort to reduce the space required for the laminators, which as noted previously, account for a large proportion of the photovoltaic module production line equipment area, and to improve throughput per unit area of production equipment.

However, the laminator described above, because it laminates using the top laminating unit and the bottom laminating unit simultaneously, is designed so that the upper case and the lower case are respectively lowered and raised at the same time with respect to the middle case. Therefore, space is required for the upper case and the lower case to be lowered and raised. Consequently, even though there are only two laminating units, the height of the laminator as a whole increases.

In addition, examining only the laminating process, it can be seen that the laminator described above does improve the efficiency of the laminating process. However, in order to carry out laminating simultaneously, at least two photovoltaic panels must be prepared. In other words, it is assumed that, in the pre-laminating stage, two photovoltaic panels to be laminated are stocked. Therefore, in the event that two photovoltaic panels to be laminated are not stocked it is necessary to wait for the two photovoltaic device panels to be laminated to be manufactured. Consequently, even though the number of laminating units is increased, overall the throughput per unit of photovoltaic module production equipment area is not improved.

Moreover, once the laminating process is finished, two photovoltaic panels are moved to the post-laminating stage of the production process at the same time. However, in the event that two photovoltaic panels cannot be processed in the post-laminating stage, the stock of photovoltaic panels simply increases, and overall the throughput per unit of photovoltaic module production equipment area is not improved.

It should be noted that, if the number of stacked laminating units is further increased, the height of the laminator increases as does the stock of photovoltaic panels in the pre- and post-laminating stage, leading to a reduction in photovoltaic module production efficiency.

Finally, when laminating, the filler sometimes spills out from the photovoltaic panel and adheres to the face of the heater or to the diaphragm. If laminating is performed in this state, the filler will adhere to the next photovoltaic device panel to be laminated, and therefore any filler adhering to the face of the heater or to the diaphragm must be scraped off. However, the laminator described above is not equipped with a device for scraping off the filler. Consequently, it is necessary to remove any adhered filler manually, leading to a reduction in photovoltaic module production efficiency.

### BRIEF SUMMARY OF THE INVENTION

The present invention is conceived in light of the problems described above, and provides a laminator having a plurality of laminating units, which maximizes the number of stacked levels of chambers of the laminator to the extent permitted by the actual installation height allowed while at the same time improves throughput per unit area of production equipment for the production of workpieces, without increasing the stock of photovoltaic module workpieces in the pre- and post-laminating stages of production.

In addition, the laminating units of the laminator described above are configured to scrape off filler adhering to a conveyer belt or to a release sheet to be described later, thus improving the efficiency of workpiece production.

The laminator of the present invention comprises a plurality of vertically stacked laminating units, each laminating unit comprising:
an upper case enclosing an upper chamber;
a lower case enclosing a lower chamber upon which the upper chamber can be set, the upper chamber and the lower chamber openably closable with respect to each other to form a substantially sealed space therebetween;
a heating plate disposed in the lower chamber upon which the workpiece can be set; and
a pressing member disposed in the upper chamber above the heating plate,
the laminator further including opening and closing devices for opening and closing each of the laminating units one after another in succession,
the heating plate and the pressing member configured to press between them the workpiece set on the heating plate between the heating plate and the pressing member,
each laminating unit capable of perform laminating independently of the other laminating units.

The upper case of a given laminating unit and the lower case of a laminating unit stacked directly above the given laminating unit may form a single integrated unit, and the opening and closing devices open and close the given laminating unit by respectively raising and lowering the single integrated unit.

The upper case of the given laminating unit may be fixedly mounted on the lower case of the laminating unit stacked loading above the given laminating unit.

The above-described laminator may further comprise a loading device to deliver the workpiece to the laminating units and a unloading device to remove the workpiece from the laminating units, wherein the loading device and the unloading device are raised and lowered to positions corresponding to a laminating unit being opened or closed by the opening and closing devices.

The above-described laminator may further comprise a conveyer belt disposed within the lower case between the heating plate and the pressing member for conveying a workpiece set on the heating plate and a drive device for driving the conveyer belt, with the loading device including a cleaning device for removing filler sediment adhering to a conveyance surface of the conveyer belt.

The conveyer belt may circulate within the lower case.

The above-described laminator may further comprise a release sheet disposed within the upper case between the pressing member and the workpiece, with the loading device and the unloading device each including a cleaning device for removing filler sediment adhering to a surface of the release sheet.

The release sheet may be wound around rollers provided to the upper case.

The upper case of a given laminating unit and the lower case of a laminating unit stacked directly above the given laminating unit may form a single integrated case, and the opening and closing devices open and close the given laminating unit by respectively raising and lowering the case.

The laminator may further comprise a loading device to deliver the workpiece to the laminating units and a unloading device to remove the workpiece from the laminating units, wherein the loading device and the unloading device are raised and lowered to positions corresponding to a laminating unit being opened or closed by the opening and closing devices.

The laminator may further comprise a conveyer belt disposed within the lower case between the heating plate and the pressing member for conveying a workpiece set on the heating plate and a drive device for driving the conveyer belt, the loading device including a cleaning device for removing filler sediment adhering to a conveyance surface of the conveyer belt.

The laminator may further comprise a combined loading and unloading device for delivering a workpiece to the laminating units and removing the workpiece from the laminating units.

The present invention enables the throughput per unit area of production equipment to be improved without increasing the area required for the laminator. In addition, the height of the laminator can be reduced. Moreover, there is no increase in the stock of photovoltaic module workpieces in the pre- and post-laminating stages of production, thereby enabling workpiece production efficiency to be improved.

In addition, for example, as described later each laminating unit is designed to be scrape off any filler adhering to the conveyer belt or the release sheet, thereby enabling workpiece production efficiency to be improved.

### BRIEF DESCRIPTION OF THE DRAWINGS

FIG. 1A is a diagram showing the front view of a laminator according to the first embodiment of the present invention;
FIG. 1B is a diagram showing the plan view of a laminator according to the first embodiment;
FIG. 1C is a diagram showing the configuration of a loading device according to the first embodiment;
FIG. 1D is a diagram showing the configuration of an unloading device according to the first embodiment;
FIG. 2 is a diagram showing the configuration of the laminating units according to the first embodiment;
FIG. 3 is a diagram showing a cross-sectional view of the configuration of a photovoltaic module as the workpiece;
FIG. 4A is a diagram showing a laminating process performed by the laminator according to the first embodiment;
FIG. 4B is a diagram showing a laminating process performed by the laminator according to the first embodiment;
FIG. 4C is a diagram showing a laminating process performed by the laminator according to the first embodiment;
FIG. 4D is a diagram showing a laminating process performed by the laminator according to the first embodiment;
FIG. 4E is a diagram showing a laminating process performed by the laminator according to the first embodiment;
FIG. 5 is a diagram showing movement of the conveyor belt and release sheet of the laminator according to the first embodiment
FIG. 6A is a diagram showing a frontal view of the laminator according to the second embodiment;
FIG. 6B is a diagram showing a plan view of the laminator according to the second embodiment;
FIG. 6C is a diagram showing the composition of the loading device according to the second embodiment;
FIG. 6D is a diagram showing the composition of the unloading device according to the second embodiment;
FIG. 7 is a diagram showing the composition of the laminating units according to the second embodiment;
FIG. 8A is a diagram showing a lamination process performed by the laminator according to the second embodiment; and
FIG. 8B is a diagram showing a lamination process performed by the laminator according to the second embodiment.

Other features and advantages of the present invention will be apparent from the following description when taken in conjunction with the accompanying drawings, in which like reference characters designate similar or identical parts throughout the several views thereof.

### DETAILED DESCRIPTION OF THE PREFERRED EMBODIMENTS

A description is now given of embodiments of the present invention with reference to the drawings. It should be noted that, in the embodiment described below, a description is given of lamination using a photovoltaic module as a workpiece.

### (First Embodiment)

The laminator according to the present embodiment is adapted to processes in which sediment from the filler that constitutes part of the photovoltaic module tends to easily adhere, such as processes in which the filler is not heated until the filler completely crosslinks but only until the filler reaches a half-crosslinked state.

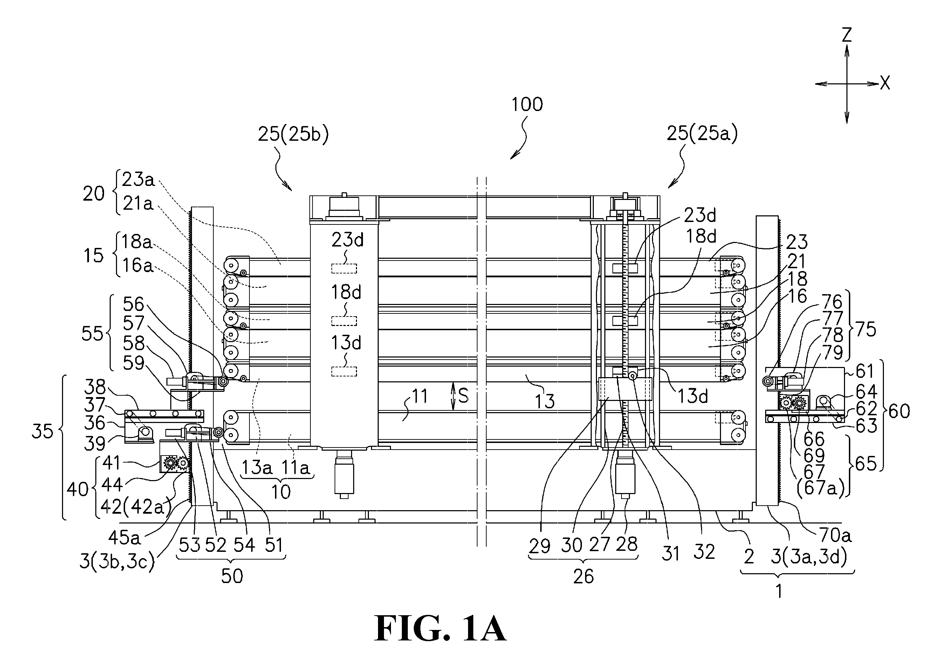

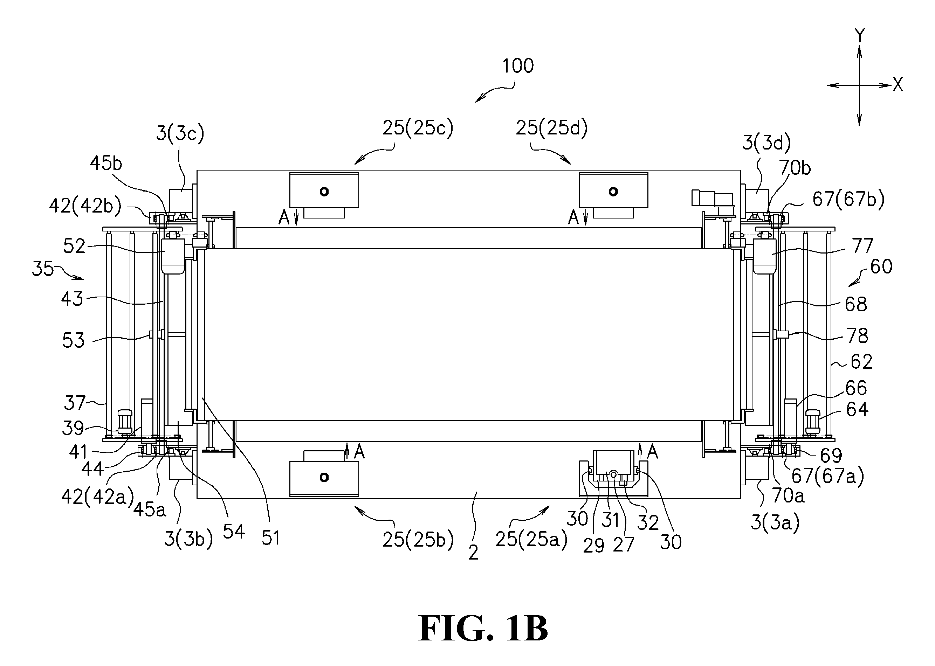

FIG. 1A shows the front view of a laminator according to the first embodiment of the present invention. FIG. 1B shows the plan view of a laminator according to the first embodiment of the present invention. In FIG. 1A and FIG. 1B, an X-axis direction represents a width direction of the laminator, a Y-axis direction represents a depth direction of the laminator, and a Z-axis direction represents a height direction of the laminator.

A laminator 100 is comprised of a frame 1; a plurality of laminating units 10, 15, and 20; four opening and closing devices 25a-25d (referred to collectively as opening and closing devices 25) that open and close the laminating units 10, 15, and 20; a loading device 35 for conveying the photovoltaic modules to the laminating units 10, 15, and 20; and an unloading device 60 for conveying the photovoltaic modules conveyed from the laminating units 10, 15, and 20.

The frame 1 includes a base 2 with legs set on the floor and four posts extending vertically from both end surfaces of the base 2 in the width direction thereof (see FIG. 1B). Provided that the height of the laminator permits, it is also possible for the number of laminating units to exceed three.

The plurality of laminating units 10, 15, and 20 are disposed horizontally, and parallel to the top surface of the base 2. In addition, the laminating units 10, 15, and 20 are disposed between the four opening and closing devices 25 (25a-25d) that project vertically from the base 2 (see FIG. 1B). The laminating units according to the present embodiment are vertically stacked one on top of the other in three levels. More specifically, the laminator 100 is comprised of a first-level laminating unit 10 placed directly atop the base 2, a second-level laminating unit 15, and a third-level laminating unit 20.

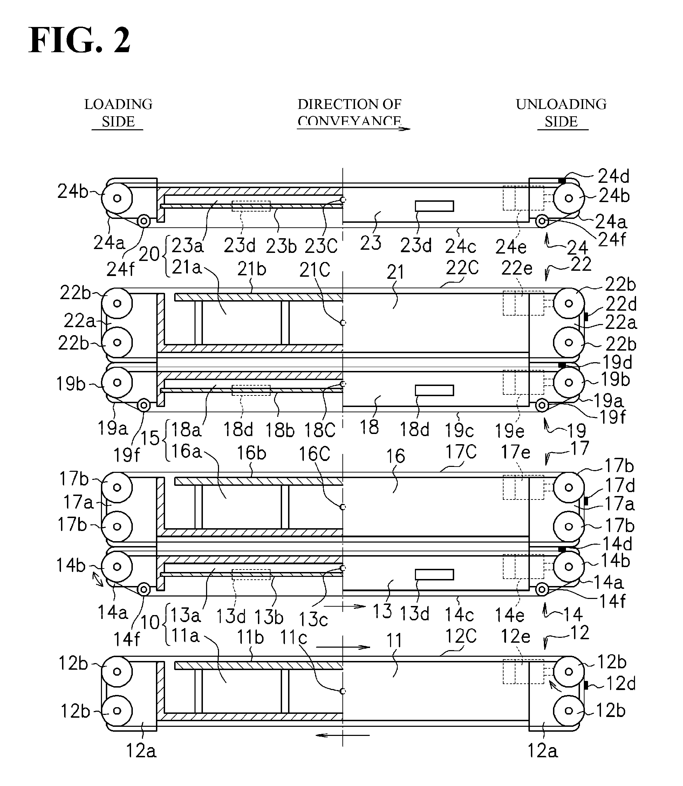

A detailed description is now given of the laminating units 10, 15, and 20 with reference to FIG. 2. FIG. 2 shows the front view of a partial cross-section of the laminating units 10, 15, and 20. In FIG. 2, the elements that constitute the laminating units 10, 15, and 20 are shown separated. In addition, in FIG. 2, the laminating units 10, 15, and 20 are shown shortened in the width direction.

First, a description is given of the first-level laminating unit 10. The first-level laminating unit 10 is comprised of a lower chamber 11a formed in a lower case 11 and an upper chamber 13a formed in an upper case 13.

There is an open space at the top of lower case 11, in other words where the lower chamber 11a is formed. A heating plate 11b for heating the photovoltaic module is disposed horizontally in the lower chamber 11a so as to close off the opening, that is, to close off the top of the lower chamber 11a. A vacuum/discharge port 11c for putting the interior of the lower chamber 11a into a vacuum state is provided at a lateral side wall in the depth direction of the lower case 11.

The lower case 11 is provided with a conveyor device 12. The conveyor device 12 accepts un-laminated photovoltaic modules prior to laminating from the loading device 35, conveys them to the center of the heating plate 11b, and transfers laminated photovoltaic modules to the unloading device 60 after laminating. The conveyor device 12 includes two conveyor roller supports 12a, four conveyor rollers 12b supported by the conveyor roller supports 12a, a conveyor belt 12c wrapped around the four conveyor rollers 12b, and a conveyor belt drive motor 12e that rotates the conveyor rollers 12b. The conveyor belt 12c is configured to pass over the top and under the bottom of the lower case 11 as it is driven by the four conveyor rollers 12b. The top surface of the conveyor belt 12c positioned above the heating plate 11b forms a conveyance surface that conveys the photovoltaic modules. In addition, the conveyor belt 12c is endless, with its two ends connected via a connecting member 12d. As the conveyor rollers 12b are rotated by the conveyor belt drive motor 12e in a direction indicated by the arrow shown in FIG. 2, the conveyance surface of the conveyor belt 12c can be moved from the loading device 35 side to the unloading device 60 side. Further continuous rotation causes the conveyor belt 12c after it has passed over the top of the heating plate 11b to pass under the bottom of the lower case 11 and then once again return to the top of the heating plate 11b in a circulatory motion.

There is an open space at the bottom of the upper case 13, in other words where the upper chamber 13a is formed. A diaphragm 13b as a pressing member is disposed horizontally in the upper chamber 13a so as to divide the space vertically into upper and lower portions. As described later, as the diaphragm 13b expands downward the photovoltaic module can be pressed between the diaphragm 13b and the heating plate 11b. A vacuum/discharge port 13c for putting the interior of the upper chamber 13a into a vacuum state and for introducing air into the interior of the upper chamber 13a is provided at a lateral side wall in the depth direction of the upper case 13. In addition, in each of both lateral side surfaces of the upper case 13 in the depth direction thereof are provided two supports 13d supported by flange members of the opening and closing devices 25a-25d described later, separated from each other in the width direction of the top chamber 13. Each support 13d is provided so as to project horizontally from the upper case 13.

A release sheet device 14 is provided in the upper case 13. The release sheet device 14 prevents photovoltaic modules filler melted in the laminating process from adhering to the diaphragm 13b. The release sheet device 14 is comprised of roller supports 14a, two rollers 14b supported by the roller supports 14a, a release sheet 14c wrapped around the rollers 14b, a release sheet drive motor 14e that rotates the rollers 14b, and two auxiliary rollers 14f. The release sheet 14c is wrapped around the two rollers 14b and the two auxiliary rollers 14f and passes over the top and under the bottom of the upper case 13. In addition, the release sheet 14c is endless, with its two ends connected via a connecting member 14d. As the rollers 14b are rotated by the release sheet drive motor 14e in a direction indicated by the arrow shown in FIG. 2, the surface of the release sheet 14c positioned below the diaphragm 13b can be passed over the top of the upper case 13, and the surface of the release sheet 14c positioned above the upper case 13 can be passed below the diaphragm 13b. It should be noted that the connecting member 14d is always kept above the upper case 13 without ever passing over the rollers 14b and moving to below the upper case 13. In other words, the connecting member 14d moves reciprocally between a position near the loading-side rollers 14b to a position near the unloading-side rollers 14b.

By lowering the upper case 13 (which forms a single integrated unit with the lower case 16 of the second level), positioning it at the lower case 11, and setting it on the lower case 11 so that the two cases are stacked one on top of the other, the laminating unit 10 comprised of the upper chamber 13a and the lower chamber 11a can be closed and sealed. By raising the upper case 13 from the sealed state, the laminating unit 10 comprised of the upper chamber 13a and the lower chamber 11a can be opened.

Next, a description is given of the second-level laminating unit 15. The second-level laminating unit 15 is comprised of a lower chamber 16a formed in a lower case 16 and an upper chamber 18a formed in an upper case 18. The constituent elements of the second-level laminating unit 15 are the same as the constituent elements of the first-level laminating unit 10 described above, and thus a detailed description thereof is omitted.

There is an open space at the top of lower case 16, in other words where the lower chamber 16a is formed. A heating plate 16b and a vacuum/discharge port 16c are provided in the lower chamber 16a.

A conveyor device 17 is provided in the lower case 16. The conveyor device 17 includes conveyor roller supports 17a, four conveyor rollers 17b, a conveyor belt 17c, and a conveyor belt drive motor 17e. The conveyor belt 17c is endless, with its two ends connected via a connecting member 17d.

The lower case 16 of the lower chamber 16a that constitutes the second-level laminating unit 15 forms a single integrated unit with the upper case 13 of the upper chamber 13a that constitutes the first-level laminating unit 10. For example, the lower case 16 and the upper case 13 may be constituted as a single integrated unit by fixing in place the conveyor roller supports 17a mounted on the lower case 16 and the roller supports 14a mounted on the upper case 13 with a fixing means such as screws or the like, not shown. In any case, as shown in FIG. 2, a gap is retained between the top side of the upper case 13 and the bottom side of the lower case 16 to enable the conveyor belt 17c and the release sheet 14c to move unhindered. By constituting the lower case 16 and the upper case 13 as a single integrated unit in this manner, both cases can be raised and lowered simultaneously as will be described later. It should be noted that the present embodiment is not limited to an arrangement in which the lower case 16 and the upper case 13 are fixed in place using the fixing means described above, and thus may be constituted in any way that allows the lower case 16 and the upper case 13 to be raised and lowered as a single integrated unit. For example, provided that the conveyor belt 17c and the release sheet 14c can move unhindered, the lower case 16 and the upper case 13 may be fixed directly to each other.

There is an open space at the bottom of the upper case 18, in other words where the upper chamber 18a is formed. A diaphragm 18b and a vacuum/discharge port 18c are provided in the upper chamber 18a. In addition, in each of both lateral side surfaces of the upper case 18 in the depth direction thereof are provided two supports 18d, separated from each other in the width direction of the upper chamber 18.

A release sheet device 19 is provided in the upper case 18. The release sheet device 19 includes roller supports 19a, two rollers 19b, a release sheet 19c, a release sheet drive motor 19e, and two auxiliary rollers 19f. The release sheet 19c is endless, with its two ends connected via a connecting member 19d.

By lowering the upper case 18 (which forms a single integrated unit with the lower case 21 of the third level), positioning it at the lower case 16, and setting it on the lower case 16 so that the two cases are stacked one on top of the other, the laminating unit 15 comprised of the upper chamber 18a and the lower chamber 16a can be closed and sealed. By raising the upper case 18 from the sealed state, the laminating unit 15 comprised of the upper chamber 18a and the lower chamber 16a can be opened.

Next, a description is given of the third-level laminating unit 20. The third-level laminating unit 20 is comprised of a lower chamber 21a formed in a lower case 21 and an upper chamber 23a formed in an upper case 23. The constituent elements of the third-level laminating unit 20 are the same as the constituent elements of the first-level laminating unit 10 described above, and thus a detailed description thereof is omitted.

There is an open space at the top of lower case 21, in other words where the lower chamber 21a is formed. A heating plate 21b and a vacuum/discharge port 21c are provided in the lower chamber 21a.

A conveyor device 22 is provided in the lower chamber 21a. The conveyor device 22 includes conveyor roller supports 22a, four conveyor rollers 22b, a conveyor belt 22c, and a conveyor belt drive motor 22e. The conveyor belt 22c is endless, with its two ends connected via a connecting member 22d.

The lower case 21 of the lower chamber 21a that constitutes the third-level laminating unit 20 forms a single integrated unit with the upper case 18 of the upper chamber 18a that constitutes the second-level laminating unit 15. For example, the lower case 21 and the upper case 18 may be constituted as a single integrated unit by fixing in place the conveyor roller supports 22a mounted on the lower case 21 and the roller supports 19a mounted on the upper case 18 with a fixing means such as screws or the like, not shown. In any case, as shown in FIG. 2, a gap is retained between the top side of the upper case 18 and the bottom side of the lower case 21 to enable the conveyor belt 22c and the release sheet 19c to move unhindered. By constituting the lower case 21 and the upper case 18 as a single integrated unit in this manner, both cases can be raised and lowered simultaneously as will be described later. It should be noted that the present embodiment is not limited to an arrangement in which the lower case 21 and the upper case 18 are fixed in place using the fixing means described above, and thus may be constituted in any way that allows the lower case 21 and the upper case 18 to be raised and lowered as a single integrated unit. For example, provided that the conveyor belt 22c and the release sheet 19c can move unhindered, the lower case 21 and the upper case 18 may be fixed directly to each other.

There is an open space at the bottom of the upper case 23, in other words where the upper chamber 23a is formed. A diaphragm 23b and a vacuum/discharge port 23c are provided in the upper chamber 23a. In addition, in each of both lateral side surfaces of the upper case 23 in the depth direction thereof are provided two supports 23d, separated from each other in the width direction of the upper chamber 23.

A release sheet device 24 is provided in the upper case 23. The release sheet device 24 includes roller supports 24a, two rollers 24b, a release sheet 24c, a release sheet drive motor 24e, and two auxiliary rollers 24f. The release sheet 24c is endless, with its two ends connected via a connecting member 24d.

By lowering the upper case 23, positioning it at the lower case 21, and setting it on the lower case 21 so that the two cases are stacked one on top of the other, the laminating unit 20 comprised of the upper chamber 23a and the lower chamber 21a can be closed and sealed. By raising the upper case 23 from the sealed state, the laminating unit 20 comprised of the upper chamber 23a and the lower chamber 21a can be opened.

It should be noted that, when the upper cases and the lower cases described above are installed in the laminator 100, when not supported by the opening and closing devices 25 described later, the upper cases and the lower cases are stacked flat, that is, the laminating units are closed. At this time, the weight of the upper cases is borne by the lower cases, and the weight of the upper and lower cases of the upper levels are borne by the upper and lower cases of the lower levels.

Next, a description is given of the opening and closing devices 25 with reference to FIG. 1A and FIG. 1B. The opening and closing devices 25 can open and close any of the laminating units 10, 15, and 20. The four opening and closing devices 25a-25d are set apart at corresponding opposed positions on the base 2. The configurations of the four opening and closing devices 25a-25d are the same, and a description is given with reference to opening and closing device 25a shown with its outer cover partially cut away.

The opening and closing device 25a includes an elevator device 26, a flange member 31, and a flange member drive device 32. The elevator device 26 has a ball screw 27, a servo motor 28, an elevator member 29, and a guide member 30. The ball screw 27 projects vertically from the base 2, and is supported on its distal end by a bearing. The servo motor 28 is connected to the proximal base end of the ball screw 27, and by its driving action can rotate the ball screw 27. The guide member 30 projects vertically along both sides of and parallel to the ball screw 27. The elevator member 29 engages both a portion of the ball screw 27 as well as the two guide members 30. Accordingly, the elevator member 29 ascends as the ball screw 27 rotates in one direction and descends as the ball screw 27 rotates in the other direction.

The above-described flange member 31 and flange member drive device 32 are mounted on the elevator member 29. The flange member 31 is configured to be horizontal and to be able to extend toward the center of the laminator 100 (in the direction indicated by arrow A in FIG. 1B). The flange member drive device 32 may be an air cylinder, for example a cylinder rod connected to a portion of the flange member 31. Accordingly, the flange member drive device 32 is able to extend and retract the flange member 31 horizontally. When the flange member 31 is in its extended state, it is designed to be able to support from below the supports 13d, 18d, and 23d of the upper cases 13, 18, and 23, respectively. In contrast, when the flange member 31 is in its retracted state, it is also designed so that the elevator member 29 is able to ascend and descend freely without contacting any other material.

The elevator devices 26 and the flange member drive devices 32 of each of the opening and closing devices 25a-25d are controlled so that they all operate in synchrony. Moreover, the heights of the flange members 31 of the opening and closing devices 25a-25d are set so that they are all the same. Accordingly, when the flange members 31 of the opening and closing devices 25a-25d are projected, the four opening and closing devices 25a-25d can be positioned below any of the supports 13d, 18d, and 23d of the upper cases 13, 18, and 23, respectively. Further, by driving the servo motors 28 of the opening and closing devices 25a-25d in a state in which the flange members 31 are positioned below the supports, the upper cases of each of the levels can be raised or lowered at will.

When the flange members 31 are positioned below the supports 13d of the upper case 13 and the four opening and closing devices 25a-25d raise the elevator members 29, the first-level laminator 10 can be opened (see FIG. 1A). At this time, the weight of the upper case 23, the lower case 21, the upper case 18, the lower case 16, and the upper case 13 is supported by the flange members 31. By contrast, when the four opening and closing devices 25a-25d lower the elevator members 29 with the first-level laminating unit 10 open, the first-level laminating unit 10 can be closed.

When the flange members 31 are positioned below the supports 18d of the upper case 18 and the four opening and closing devices 25a-25d raise the elevator members 29, the second-level laminator 15 can be opened. At this time, the weight of the upper case 23, the lower case 21, and the upper case 18 is supported by the flange members 31. By contrast, when the four opening and closing devices 25a-25d lower the elevator members 29 with the second-level laminating unit 15 open, the second-level laminating unit 15 can be closed.

When the flange members 31 are positioned below the supports 23d of the upper case 23 and the four opening and closing devices 25a-25d raise the elevator members 29, the third-level laminator 20 can be opened. By contrast, when the four opening and closing devices 25a-25d lower the elevator members 29 with the third-level laminating unit 20 open, the third-level laminating unit 20 can be closed.

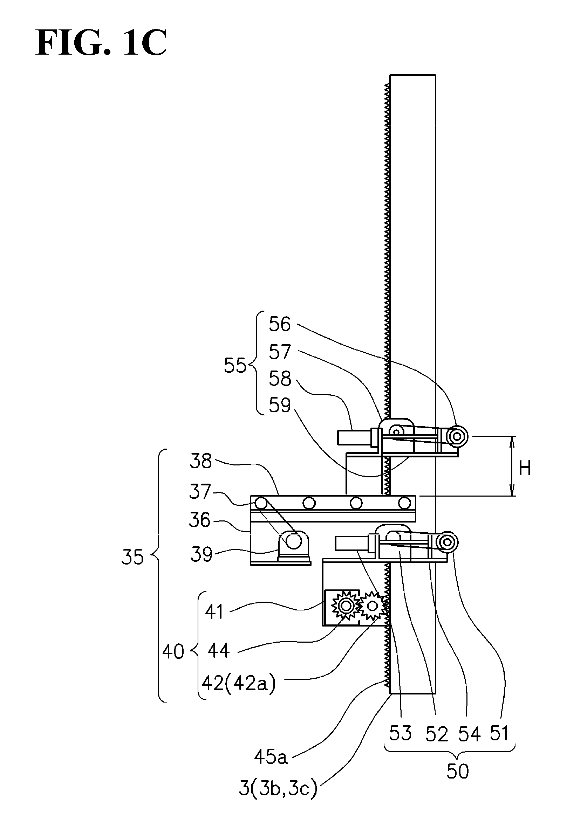

Next, a description is given of the loading device 35 with reference to FIG. 1A, FIG. 1B, and FIG. 1C. It should be noted that FIG. 1C shows an enlarged view of the configuration of the loading device 35. The loading device 35 delivers not-yet-laminated photovoltaic modules into the laminating units 10, 15, and 20 opened by the opening and closing device 25.

The loading device 35 is disposed between support posts 3b and 3c (see FIG. 1B) arranged adjacent in a depth direction of the laminator 100. The loading device 35 has a box-like housing 36, a plurality of loading rollers 37, a loading belt 38, a loading roller drive motor 39, a loading elevator device 40, a conveyor belt cleaning device 50, and a release sheet cleaning device 55. The box-like housing 36 is configured so as to support the constituent elements of the loading device 35. In the present embodiment, there are four loading rollers 37 aligned horizontally and arranged parallel to each other in a state in which their axes of rotation extend in the depth direction of the laminator 100. It should be noted that the precise number of loading rollers 37 can be increased or decreased as needed depending on the size of the photovoltaic modules to be laminated. The loading belt 38 is wound around the two outer loading rollers 37. The top surface of the loading belt 38 constitutes a placement surface on which the photovoltaic modules are set. The loading roller drive motor 39 is supported by the box-like housing 36. A belt is wound around the output shaft of the loading roller drive motor 39 and one of the loading rollers 37. As the loading roller drive motor 39 rotates, the placement surface of the loading belt 38 can be moved toward the laminating units.

Next, a description is given of the loading elevator device 40. The loading elevator device 40 can raise and lower the loading device 35 together with the laminating units opened by the opening and closing devices 25. The loading elevator device 40 has a loading elevator motor 41 and pinions 42. The loading elevator motor 41 is located inside the above-described box-like housing 36 and is attached to the support post 3b side in the depth direction of the laminator 100 (see FIG. 1B). A gear 44 is provided on the output shaft of the loading elevator motor 41. There are two pinions 42 provided, one on the support post 3b side and one on the support post 3c side. Pinion 42a, provided on the support post 3b side, engages the gear 44 on the loading elevator motor 41. Pinion 42b is coupled to pinion 42a via a shaft 43, and is synchronized with pinion 42a. On the support post 3b side, a rack 45a that engages the pinion 42a is provided on a lateral surface of the support post 3b, extending in a vertical direction. Similarly, on support post 3c, a rack 45b that engages pinion 42b is provided on a lateral surface of the support post 3c, also extending in the vertical direction. Therefore, by driving the loading elevator motor 41, the pinions 42a and 42b rotate, raising and lowering the loading device 35 along the support posts 3b and 3c. It should be noted that the loading device 40 is not limited to the foregoing configuration, and thus, for example, the pinion 42a can be coupled directly to the output shaft of the loading elevator motor 41. In addition, ascent and descent is not limited to that which is accomplished using a rack and pinion arrangement. Thus, for example, ascent and descent may be accomplished using a ball screw arrangement like that of the opening and closing devices 25, or by a wire suspended from an elevator motor mounted on top of the support post.

Next, a description is given of the conveyor belt cleaning device 50. The conveyor belt cleaning device 50 scrapes off filler sediment adhering to the conveyance surface of the conveyor belt. The conveyor belt cleaning device 50 has a belt cleaning unit 51, a cleaning unit rotation motor 52, and a cleaning unit advancement/retraction device 53. The belt cleaning unit 51 is shaped like a roller, along whose entire circumferential surface is stuck a brush that scrapes off filler sediment adhering to the conveyor belt. The belt cleaning unit 51 is disposed so that a long side thereof is aligned in the depth direction of the laminator 100, and is rotatably mounted on a support plate 54 of the box-like housing 36. The cleaning unit rotation motor 52 is similarly mounted on the support plate 54 like the belt cleaning unit 51. A belt is wound between the output shaft of the cleaning unit rotation motor 52 and the belt cleaning unit 51, such that, by rotating the cleaning unit rotation motor 52, the belt cleaning unit 51 can be rotated.

The cleaning unit advancement/retraction device 53 may be an air cylinder, for example, provided at a center of the box-like housing 36 in the depth direction thereof (see FIG. 1B). The cleaning unit advancement/retraction device 53 horizontally advances and retracts the support plate 54 that supports the belt cleaning unit 51 and the cleaning unit rotation motor 52. When the cleaning unit advancement/retraction device 53 advances the support plate 54, the belt cleaning unit 51 can be pressed against the conveyance surface of the conveyor belt as shown in FIG. 1A. With the belt cleaning unit 51 pressed against the conveyance surface of the conveyor belt, as the conveyor belt is moved the belt cleaning unit 51 is rotated by the cleaning unit rotation motor 52, enabling the belt cleaning unit 51 to remove filler sediment adhering to the conveyance surface of the conveyor belt. When the cleaning unit advancement/retraction device 53 retracts the support plate 54, the belt cleaning unit 51 can be separated from the conveyance surface of the conveyor belt.

Next, a description is given of the release sheet cleaning device 55. The release sheet cleaning device 55 scrapes off filler sediment adhering to the surface of the release sheet. The release sheet cleaning device 55 is provided at a position separated a distance H from the top surface of the loading belt 38 (see FIG. 1C). The distance H is substantially equivalent to a distance S between the upper case and the lower case of the laminating units described above when they are open (see FIG. 1A). The release sheet cleaning device 55 has a sheet cleaning unit 56, a cleaning unit rotation motor 57, and a cleaning unit advancement/retraction device 58. The sheet cleaning unit 56 is shaped like a roller, along whose entire circumferential surface is stuck a brush that scrapes off filler sediment adhering to the release sheet. The sheet cleaning unit 56 is disposed so that the long side thereof is aligned in the depth direction of the laminator 100, and is rotatably mounted on a support plate 59. The cleaning unit rotation motor 57 is similarly mounted on the support plate 59 like the sheet cleaning unit 56. A belt is wound between the output shaft of the cleaning unit rotation motor 57 and the sheet cleaning unit 56, such that, by rotating the cleaning unit rotation motor 57, the sheet cleaning unit 56 can be rotated.

The cleaning unit advancement/retraction device 58 may be an air cylinder, for example, provided at a center of the box-like housing 36 in the depth direction thereof (see FIG. 1B). The cleaning unit advancement/retraction device 58 horizontally advances and retracts the support plate 59 that supports the sheet cleaning unit 56 and the cleaning unit rotation motor 57. When the cleaning unit advancement/retraction device 58 advances the support plate 59, the sheet cleaning unit 56 can be pressed against the surface of the release sheet as shown in FIG. 1A. With the sheet cleaning unit 56 pressed against the conveyance surface of the release sheet, as the release sheet is moved the sheet cleaning unit 56 is rotated by the cleaning unit rotation motor 57, enabling the sheet cleaning unit 56 to remove filler sediment adhering to the surface of the release sheet. When the cleaning unit advancement/retraction device 58 retracts the support plate 59, the sheet cleaning unit 56 can be separated from the surface of the sheet.

Because the loading elevator device 40 is set within the box-like housing 36, the conveyor belt cleaning device 50 and the release sheet cleaning device 55 ascend and descend in synchrony with the ascent and descent of the loading device 35. It should be noted that, while the loading device 35 is ascending and descending, the cleaning unit advancement/retraction device 53 of the conveyor belt cleaning device 50 retracts the belt cleaning unit 51 so that the belt cleaning unit 51 does not hit the conveyor belt. Similarly, the cleaning unit advancement/retraction device 58 of the release sheet cleaning device 55 retracts the sheet cleaning unit 56 so that the sheet cleaning unit 56 does not hit the release sheet.

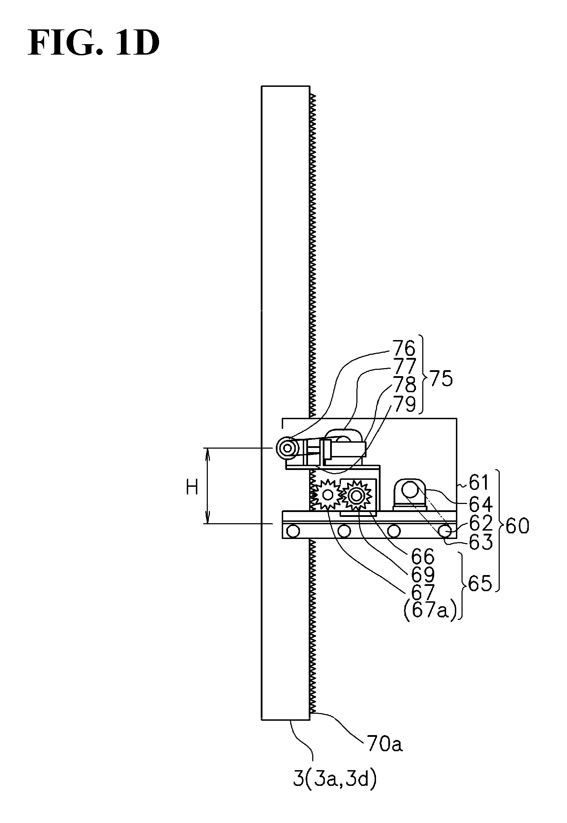

Next, a description is given of the unloading device 60 with reference to FIG. 1A, FIG. 1B, and FIG. 1D. It should be noted that FIG. 1D shows an enlarged view of the configuration of the unloading device. The unloading device 60 discharges photovoltaic modules from the laminating units 10, 15, and 20 opened by the opening and closing devices 25 after the photovoltaic modules have been laminated.

The unloading device 60 is disposed between support posts 3a and 3d (see FIG. 1B) arranged adjacent in a depth direction of the laminator 100. The unloading device 60 has a box-like housing 61, a plurality of unloading rollers 62, an unloading belt 63, an unloading roller drive motor 64, an unloading elevator device 65, and a release sheet cleaning device 75. A box-like housing 61 is configured so as to support the constituent elements of the unloading device 60. In the present embodiment, there are four unloading rollers 62 aligned horizontally and arranged parallel to each other in a state in which their axes of rotation extend in the depth direction of the laminator 100. It should be noted that the precise number of unloading rollers 62 can be increased or decreased as needed depending on the size of the photovoltaic modules to be laminated. The unloading belt 63 is wound around the two outer unloading rollers 62. A top surface of the unloading belt 63 constitutes a placement surface on which the photovoltaic modules are set. The unloading roller drive motor 64 is supported by the box-like housing 61. A belt is wound around the output shaft of the unloading roller drive motor 64 and one of the unloading rollers 62. As the unloading roller drive motor 64 rotates, the placement surface of the unloading belt 63 can be moved away from the laminating units.

Next, a description is given of the unloading elevator device 65. The unloading elevator device 65 can raise and lower the unloading device 60 together with the laminating units opened by the opening and closing devices 25. The unloading elevator device 65 has a unloading elevator motor 66 and pinions 67. The unloading elevator motor 66 is located inside the above-described box-like housing 61 and is attached to the support post 3a side in the depth direction of the laminator 100 (see FIG. 1B). A gear 69 is provided on the output shaft of the unloading elevator motor 66. There are two pinions 67 provided, one on the support post 3a side and one on the support post 3d side. Pinion 67a, provided on the support post 3a side, engages the gear 69 on the unloading elevator motor 66. Pinion 67b is coupled to pinion 67a via a shaft 68, and is synchronized with pinion 67a. On the support post 3a side, a rack 70a that engages the pinion 67a is provided on a lateral surface of the support post 3a, extending in a vertical direction. Similarly, on support post 3d, a rack 70b that engages pinion 67b is provided on a lateral surface of the support post 3d, also extending in the vertical direction. Therefore, by driving the unloading elevator motor 66, the pinions 67a and 67b can be rotated. As the pinions 67a and 67b rotate, the unloading device 60 is raised and lowered along the support posts 3a and 3d. It should be noted that the unloading device 65 is not limited to the foregoing configuration, and thus, for example, the pinion 67a can be coupled directly to the output shaft of the unloading elevator motor 66. In addition, ascent and descent is not limited to that which is accomplished using a rack and pinion arrangement. Thus, for example, ascent and descent may be accomplished using a ball screw arrangement like that of the opening and closing devices 25, or by a wire suspended from an elevator motor mounted on top of the support post.

Next, a description is given of the release sheet cleaning device 75. The release sheet cleaning device 75 scrapes off filler sediment adhering to the surface of the release sheet. The release sheet cleaning device 75 is provided at a position separated a distance H from the top surface of the unloading belt 63 (see FIG. 1D). The distance H is substantially equivalent to the distance S between the upper case and the lower case of the laminating units described above when they are open (see FIG. 1A). The release sheet cleaning device 75 has a sheet cleaning unit 76, a cleaning unit rotation motor 77, and a cleaning unit advancement/retraction device 78. The sheet cleaning unit 76 is shaped like a roller, along whose entire circumferential surface is stuck a brush that scrapes off filler sediment adhering to the release sheet. The sheet cleaning unit 76 is disposed so that a long side thereof is aligned in the depth direction of the laminator 100, and is rotatably mounted on a support plate 79. The cleaning unit rotation motor 77 is similarly mounted on the support plate 79 like the sheet cleaning unit 76. A belt is wound between the output shaft of the cleaning unit rotation motor 77 and the sheet cleaning unit 76, such that, by rotating the cleaning unit rotation motor 77, the sheet cleaning unit 76 can be rotated.

The cleaning unit advancement/retraction device 78 may be an air cylinder, for example, provided at a center of the box-like housing 61 in the depth direction thereof (see FIG. 1B). The cleaning unit advancement/retraction device 78 horizontally advances and retracts the support plate 79 that supports the sheet cleaning unit 76 and the cleaning unit rotation motor 77. When the cleaning unit advancement/retraction device 78 advances the support plate 79, the sheet cleaning unit 76 can be pressed against the conveyance surface of the release sheet. With the sheet cleaning unit 76 pressed against the surface of the release sheet, as the release sheet is moved the sheet cleaning unit 76 is rotated by the cleaning unit rotation motor 77, enabling the sheet cleaning unit 76 to remove filler sediment adhering to the surface of the release sheet. When the cleaning unit advancement/retraction device 78 retracts the support plate 79, the belt cleaning unit 76 can be separated from the conveyance surface of the release sheet as shown in FIG. 1A.

Because the release sheet cleaning device 75 is disposed within the box-like housing 61 in which the unloading elevator device 65 is disposed, it ascends and descends together with the ascent and descent of the unloading device 60. It should be noted that, while the unloading device 60 is ascending and descending, the cleaning unit advancement/retraction device 78 of the release sheet cleaning device 75 retracts the sheet cleaning unit 76 so that the sheet cleaning unit 76 does not hit the release sheet.

Next, a description is given of a workpiece 80 to be laminated by the laminator 100.

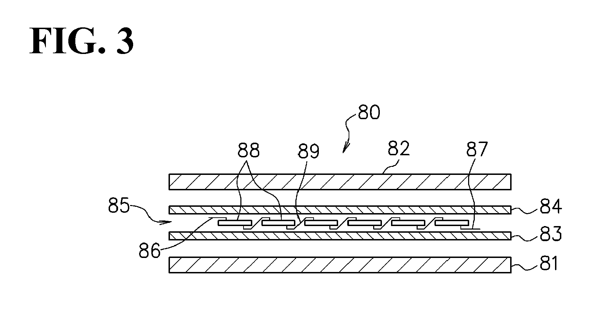

FIG. 3 is a diagram showing as the workpiece 80 a cross-sectional view of a configuration of a photovoltaic module using crystalline silicon cells. As shown in the drawing, the photovoltaic module presses a photovoltaic device string 85 between a transparent cover glass 81 and a backing material (hereinafter "backing") 82 via filler 83 and 84. A material such as polyethylene resin is used for the backing 82. Ethyl Vinyl Acetate (EVA), a copolymer of ethylene and vinyl acetate, is used for the filler 83, 84. The photovoltaic device string 85 connects crystalline cell (photovoltaic cells) 88 between electrodes 86 and 87 using lead wires 89.

It should be noted that the present invention can handle not only the photovoltaic modules described above as workpiece 80, but also photovoltaic modules widely called thin film-type cells. In a typical structural example of such thin film-type photovoltaic modules, electricity-generating elements composed of transparent electrodes, semiconductors, and back side electrodes are vapor-deposited on the transparent glass in advance. This type of thin film-type photovoltaic module has a structure in which filler is laid on top of the electricity-generating elements which are on the cover glass, with the backing then laid on top of the filler, after which the whole assembly is laminated. In other words, the basic encapsulating structure of the thin film-type photovoltaic modules is the same as that of the photovoltaic modules described above, and differs only in that the crystalline cells of the photovoltaic modules are replaced by vapor-deposited electricity-generating elements.

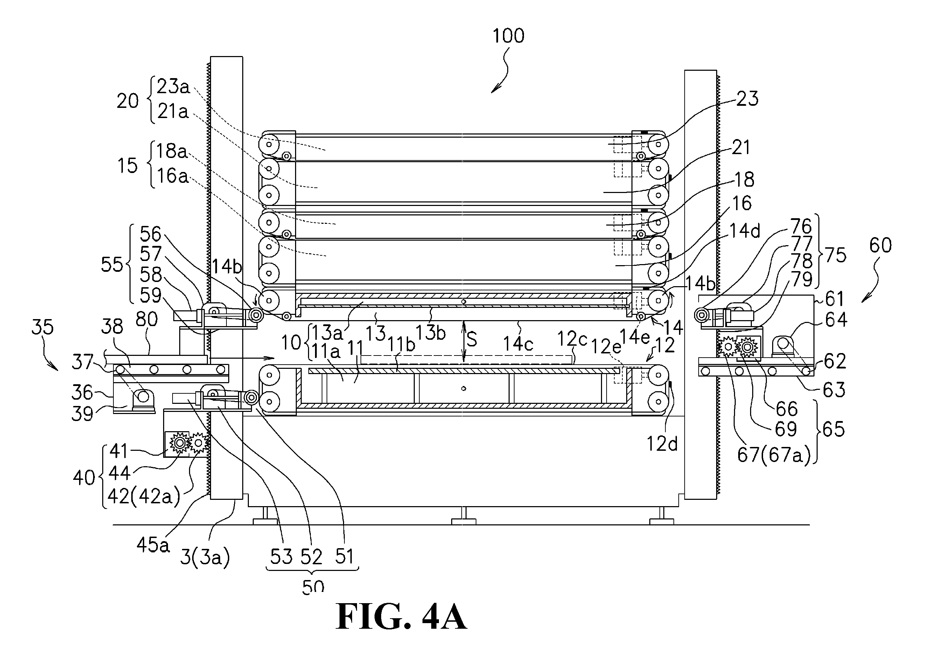

Next, a description is given of the operations performed by the laminator 100 to carry out the laminating process, with reference to FIGS. 4A-4E. It should be noted that in FIGS. 4A-4E the laminator 100 is shown with the opening and closing devices 25 omitted. The description starts from a state in which there are no photovoltaic modules in the first- through third-level laminating units 10, 15, and 20.

First, a description is given of the laminator 100 conveying a photovoltaic module to be laminated to the first-level laminating unit 10, with reference to FIG. 4A. From a state in which the upper cases and the lower cases are stacked on top of each other, as shown in FIG. 4A the opening and closing devices 25 raise the upper case 13 a distance S in order to open the first laminating unit 10. At this time, the second-level laminating unit 15 and the third-level laminating unit 20 remain closed, with the weight of the upper case 23, the lower case 21, the upper case 18, the lower case 16, and the upper case 13 is borne by the flange member 31.

In conjunction with the opening of the first-level laminating unit 10, the loading elevator device 40 raises or lowers the loading device 35 so that the top surface of the loading belt 38 and the conveyance surface of the conveyor belt 12c of the lower case 11 are flush. It should be noted that an operator of the laminator 100 will have previously placed the photovoltaic module workpiece 80 to be laminated in the first-level laminating unit 10 on the loading belt 38. While the loading elevator device 40 is raising or lowering the loading device 35, the cleaning unit advancement/retraction device 53 retracts the belt cleaning unit 51. In addition, the cleaning unit advancement/retraction device 58 retracts the sheet cleaning unit 56. Similarly, the unloading elevator device 65 raises or lowers the unloading device 60 so that the top surface of the unloading belt 63 and the conveyance surface of the conveyor belt 12c of the lower case 11 are flush. While the unloading elevator device 65 is raising or lowering the unloading device 60, the cleaning unit advancement/retraction device 78 retracts the sheet cleaning unit 76.

Next, at the loading device 35, the loading roller drive motor 39 moves the top surface of the loading belt 38 to the first-level laminating unit 10 side, thereby enabling the loading device 35 to transfer the photovoltaic module set on the loading belt 38 to the conveyor device 12 of the lower case 11. At this time, the conveyor belt cleaning device 50 advances the belt cleaning unit 51 and at the same time rotates the belt cleaning unit 51. Also, the release sheet cleaning device 55 advances the sheet cleaning unit 56 and at the same time rotates the sheet cleaning unit 56.

By contrast, at the unloading device 60, the unloading roller drive motor 64 moves the top surface of the unloading belt 63 away from the first-level laminating unit 10. In a case in which there is a laminated photovoltaic module set on the conveyor belt 12c of the lower case 11, the photovoltaic module can be accepted from the unloading device 12 of the lower case 11. It should be noted that, in a case in which the loading-side sheet cleaning unit 56 is advanced and is rotating, at the release sheet cleaning device 75 on the unloading side keeps the sheet cleaning unit 76 retracted.

At the lower case 11, the conveyor belt drive motor 12e moves the conveyance surface of the conveyor belt 12c from the loading device 35 to the unloading device 60, thereby enabling the conveyor device 12 to place the not-yet-laminated photovoltaic module transferred from the loading device 35 in the center of the laminating unit 10 as well as transfer a laminated photovoltaic module to the unloading device 60 in a case in which there is a laminated photovoltaic module in the laminating unit 10. In addition, the conveyor belt drive motor 12e is set so that with one movement the conveyor belt 12c moves approximately half a cycle. In other words, with one movement, that portion of the conveyor belt 12c which is positioned above the heating plate 11b is then positioned below the lower case 11, and that portion positioned below the lower case 11 is positioned above the heating plate 11b. In this way, the conveyor belt 12c circulates endlessly.

At this point, immediately prior to the conveyor belt 12c moving, filler that has spilled out from the photovoltaic module during the laminating process and onto the conveyance surface part of the conveyor belt 12c that is positioned below the lower case 11 cools and hardens while another photovoltaic module is being laminated. In addition, as described above, at the conveyor belt cleaning device 50, the belt cleaning unit 51 is advanced, pressed against the conveyance surface of the conveyor belt 12c, and rotates. Accordingly, when the conveyance surface part of the conveyor belt 12c positioned below the lower case 11 moves half a cycle to above the heating plate 11b, the belt cleaning unit 51 can scrape off the filler adhering to the conveyance surface. In other words, at the point in time when one movement is completed, a conveyance surface to which no filler is adhered can always be positioned above the heating plate 11b. It should be noted that, as described above, the conveyor belt 12c is provided with the connecting member 12d. When the conveyor belt 12c moves and the connecting member 12d passes the belt cleaning unit 51, the a conveyor belt cleaning device 50 retracts the belt cleaning unit 51 so that the belt cleaning unit 51 does not contact the connecting member 12d.

At the upper case 13, when the conveyor belt 12c of the lower case 11 is moving, the release sheet drive motor 14e of the release sheet device 14 moves the release sheet 14c. The release sheet drive motor 14e, like the conveyor belt 12c, is set so that with one movement the release sheet 14c moves approximately half a cycle. In other words, with one movement, that portion of the release sheet 14c which is positioned below the diaphragm 13b is then positioned above the upper case 13, and that portion positioned above the upper case 13 is then positioned below the diaphragm 13b.

At this point, immediately prior to the release sheet 14c moving, filler that has spilled out from the photovoltaic module during the laminating process and onto the conveyance surface part of the release sheet 14c that is positioned above the upper case 13 cools and hardens while another photovoltaic module is being laminated. In addition, as described above, at the loading-side release sheet cleaning device 55, sheet cleaning unit 56 is advanced and pressed against the release sheet 14c, and rotates. The release sheet drive motor 14e rotates in the direction indicated by the arrow shown in FIG. 4A so that the sheet surface positioned above the upper case 13 contacts the sheet cleaning unit 56, and the sheet cleaning unit 56 scrapes off filler adhering to the sheet surface. Thus, in this manner, at the point in time when one movement is completed, the sheet surface below the diaphragm 13b can be made a sheet surface to which no filler is adhered.

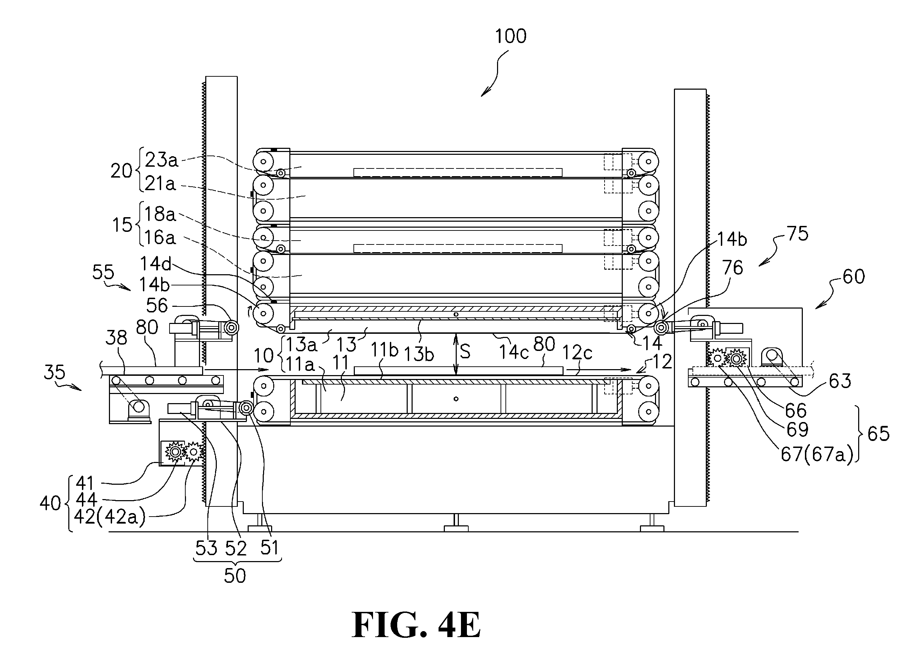

It should be noted that the release sheet device 14, unlike the conveyor device 12, reverses its direction of rotation with each movement, because the connecting member 14d with which the release sheet 14c is provided cannot move past the two rollers 14b constituted as shown in FIG. 4A and under the upper case 13. Therefore, when the connecting member 14d is at a position near the unloading-side roller 14b as shown in FIG. 4A just before the release sheet 14c begins to move, the loading-side sheet cleaning unit 56 is set to advance and at the same time the release sheet drive motor 14e moves the release sheet 14c in the direction indicated by the arrow shown in FIG. 4A. At this point, the release sheet drive motor 14e with one movement moves the connecting member 14d to a position near the loading-side roller 14b. Conversely, when the connecting member 14d is at a position near the loading-side roller 14b just before the release sheet 14c begins to move, the unloading-side sheet cleaning unit 76 is set to advance and at the same time the release sheet drive motor 14e moves the release sheet 14c in the opposite direction from the direction indicated by the arrow in FIG. 4A. Movements of the release sheet 14c in a direction different from that indicated by the arrow shown in FIG. 4A are illustrated in FIG. 4E. It is to be noted, however, that by making the configuration of the rollers 14b around which the release sheet 14c is wound the same as that of the rollers 12b around which the conveyor belt 12c is wound, the release sheet 14c can be made to be a circulating-type release sheet.

Thus, by the operations of the various constituent elements as described above, a fresh photovoltaic module to be laminated can be delivered to the center of the first-level laminating unit 10 and preparations for laminating can be performed.

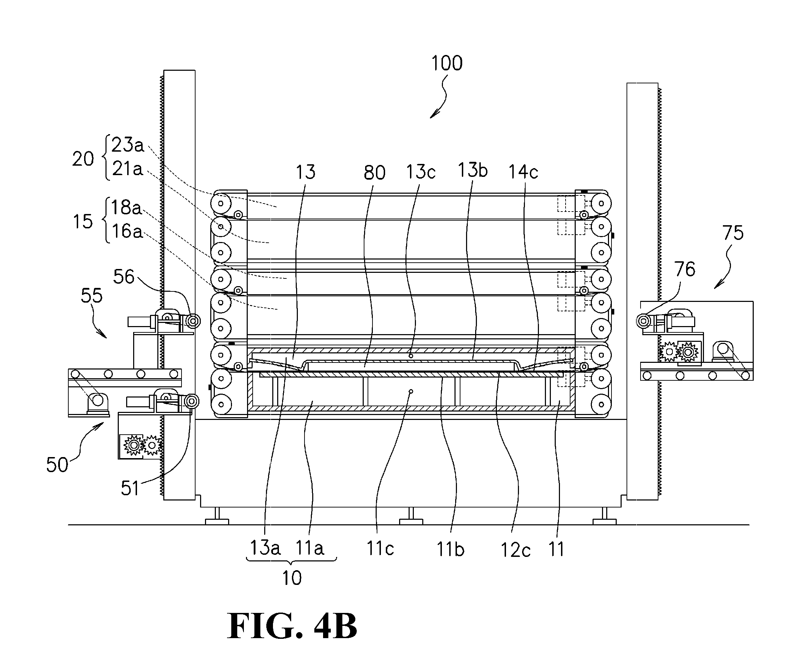

Next, a description is given of operations performed by the laminator 100 to laminate a photovoltaic module set in the laminating unit 10, with reference to FIG. 4B.

First, in order to close and seal the first-level laminating unit 10, the opening and closing devices 25 lower the upper case 13 as shown in FIG. 4B. Lowering the upper case 13 enables the first-level laminating unit 10 to be sealed. It should be noted that, when the upper case 13 is lowered, the loading-side release sheet cleaning device 55 and the unloading-side release sheet cleaning device 75 retract the advanced sheet cleaning units 56 and 76. In addition, the conveyor belt 12c cleaning device 50 also retracts the belt cleaning unit 51 in preparation for the next operation.

After the laminating unit 10 is sealed, air is sucked out of the upper chamber 13a through the vacuum/discharge port 13c in the upper case 13 to put the interior of the upper chamber 13a into a vacuum state. Similarly, air is sucked out of the lower chamber 11a through the vacuum/discharge port 11c in the lower case 11 to put the interior of the lower chamber 11a into a vacuum state. Putting the lower chamber 11a into a vacuum state enables any air bubbles contained in the workpiece 80 to be removed. In this vacuum state, the workpiece 80 is heated by the heating plate 11b and the fillers 83, and 84 contained therein are melted. Next, while maintaining the vacuum in the lower chamber 11a, air is introduced into the upper chamber 13a through the vacuum/discharge port 13c in the upper case 13 to create a difference in pressure between the upper chamber 13a and the lower chamber 11a, causing the diaphragm 13b to expand and push downward as shown in FIG. 4B.

As a result, the workpiece 80 is pressed between the downwardly expanding diaphragm 13b and the heating plate 11b and the individual constituent members of the workpiece 80 are fused together by the melted fillers 83, and 84, thus accomplishing the laminating process. It should be noted that, when the workpiece 80 is being pressed between the downwardly expanding diaphragm 13b and the heating plate 11b, the fillers 83, and 84 sometimes spill out from between the cover glass 81 and the backing and adhere to the sheet surface of the release sheet 14c and to the conveyance surface of the conveyor belt 12c.

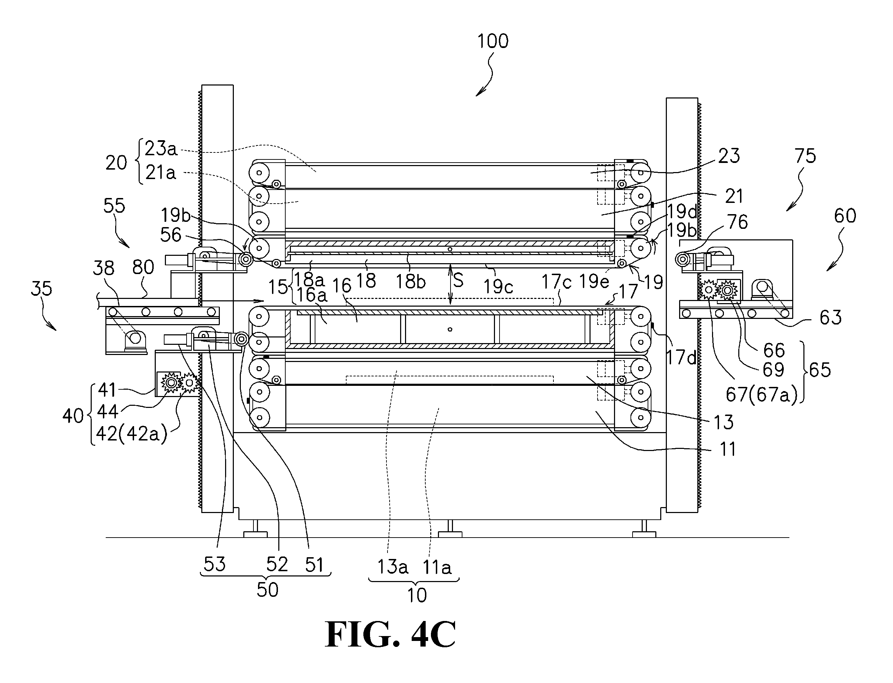

The laminator 100 according to the present embodiment optionally sets a photovoltaic module in the second-level laminating unit 15 and laminates it while carrying out the laminating process described above in the first-level laminating unit 10. Next, a description is given of the operations involved in placing a photovoltaic module in the second-level laminating unit 15, with reference to FIG. 4C. It should be noted that descriptions of the operations performed by the second-level laminating unit 15 that are the same as those performed by the first-level laminating unit 10 are omitted as convenient.

While the laminating process is being performed in the first-level laminating unit 10, as shown in FIG. 4C the opening and closing devices 25 raise the upper case 18 from the lower case 16 a distance S in order to open the second-level laminating unit 15. At this time, the first-level laminating unit 10 and the third-level laminating unit 20 remain closed and sealed. In addition, the weight of the upper case 23, the lower case 21, and the upper case 18 is supported by the flange members 31, while the weight of the lower case 16 and the upper case 13 is supported by the lower case 11.

An operator sets a photovoltaic module workpiece 80 on the loading belt 38 of the loading device 35 prior to raising the loading device 35.

In conjunction with the opening of the second-level laminating unit 15, the loading elevator device 40 raises the loading device 35 so that the top surface of the loading belt 38 and the conveyance surface of the conveyor belt 17c of the lower case 16 are flush. With the loading device 35 raised, the height of the sheet cleaning unit 56 of the release sheet cleaning device 55 of the loading device 35, and the height of the roller 19b of the upper case 18, are substantially equal. Similarly, the unloading elevator device 65 raises or lowers the unloading device 60 so that the top surface of the unloading belt 63, and the conveyance surface of the conveyor belt 17c of the lower case 16, are flush. With the unloading device 60 raised, the heights of the sheet cleaning unit 76 of the release sheet cleaning device 75 of the unloading device 60, and the roller 19b of the upper case 18, are substantially equal.

Next, the loading device 35 transfers the photovoltaic module set on the loading belt 38 to the conveyor device 17 of the lower case 16. The conveyor belt cleaning device 50 advances the belt cleaning unit 51 and at the same time rotates the belt cleaning unit 51. The release sheet cleaning device 55 advances the sheet cleaning unit 56 and at the same time rotates the sheet cleaning unit 56.

By contrast, when a laminated photovoltaic module is set on the conveyor belt 17c of the lower case 16, the unloading device 60 accepts the photovoltaic module from the conveyor device 17 of the lower case 16. If the sheet cleaning unit 56 on the loading side is advanced and is rotating, the release sheet cleaning device 75 on the unloading side keeps the sheet cleaning unit 76 retracted.

At the lower case 16, the conveyor device 17 places the not-yet-laminated photovoltaic module transferred from the loading device 35 in the center of the laminating unit 15, and at the same time transfers a laminated photovoltaic module to the unloading device 60 when there is a laminated photovoltaic module in the laminating unit 15. It should be noted that when a not-yet-laminated photovoltaic module is placed in the center of the laminating unit 15, as with the first-level laminating unit 10, the conveyance surface of the conveyor belt 17c on which the photovoltaic module is set is kept free of filler by the action of the conveyor belt cleaning device 50. In addition, when the connecting member 17d with which the conveyor belt 17c is provided, passes the belt cleaning unit 51, the conveyor belt cleaning device 50 retracts the belt cleaning unit 51 so that it does not contact the connecting member 17d.

At the upper case 18, the release sheet device 19 moves the release sheet 19c. It should be noted that, because the connecting member 19d is located near the unloading-side rollers 19b as shown in FIG. 4C, the loading-side sheet cleaning unit 56 advances while the release sheet drive motor 19e moves the release sheet 19c in the direction indicated by the arrows in FIG. 4C. Accordingly, the sheet cleaning unit 56 scrapes off any filler adhering to the sheet surface, such that, after the release sheet 19c stops moving, as with the first-level laminating unit 10, the sheet surface below the diaphragm 18b can be kept free of adhered filler.

Thus, by the operations of the constituent elements described above, a photovoltaic module to be laminated is placed in the center of the second-level laminating unit 15 and preparations for carrying out laminating are completed.

After the photovoltaic module workpiece 80 is delivered to the laminating unit 15, and the work of scraping off any filler adhering to the conveyor belt 17c and the release sheet 19c, which is performed by the conveyor belt cleaning device 50 and the release sheet cleaning devices 55 and 75, is completed, the loading-side release sheet cleaning device 55 retracts the advanced sheet cleaning unit 56, and the conveyor belt cleaning device 50 also retracts the belt cleaning unit 51 in preparation for the next operation.

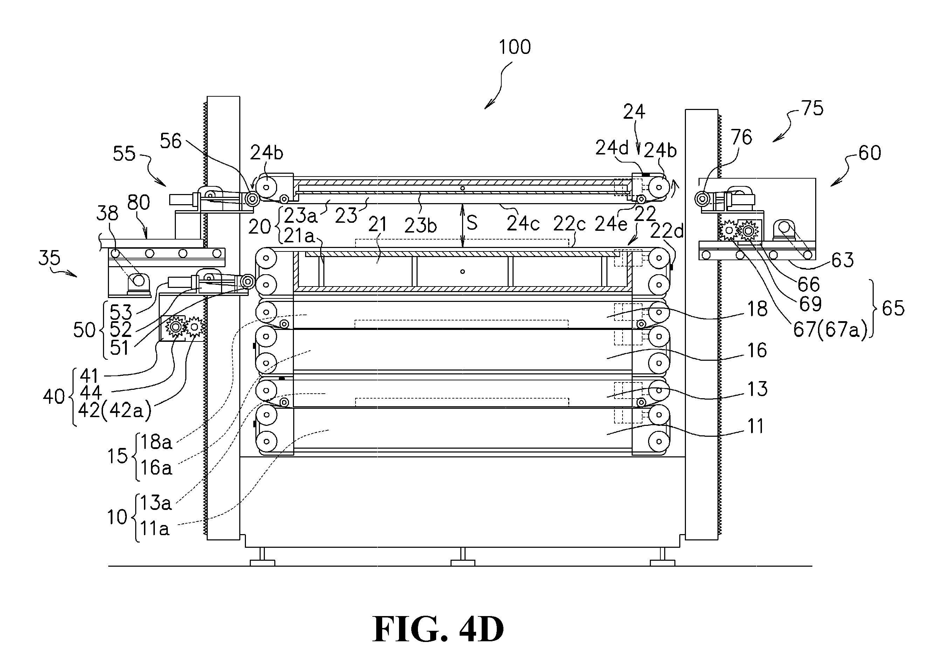

The loading device 35 is lowered to the position shown in FIG. 4A in order to enable the operator to set the fresh photovoltaic module on the loading belt 38. When there is a laminated photovoltaic module in the second-level laminating unit 15, the unloading device 60, after accepting the photovoltaic module from the conveyor device 17, is lowered to the position shown in FIG. 4A to enable the operator to remove the laminated photovoltaic module from the unloading belt 63. The photovoltaic module is then unloaded to a later stage, after which the unloading device 60 is raised to a position shown in FIG. 4D described later.

Subsequently, in order to close and seal the second-level laminating unit 15, the opening and closing devices 25 lower the raised upper case 18. Lowering the upper case 18 enables the laminating unit 15 to be sealed. After the laminating unit 15 is sealed, as with the first-level laminating unit 10 described above, laminating is similarly performed in the second-level laminating unit 15.

The laminator 100 according to the present embodiment optionally sets a photovoltaic module in the third-level laminating unit 20 and laminates it while carrying out the laminating process described above in the first-level laminating unit 10 and the second-level laminating unit 15. Next, a description is given of the operations involved in placing a photovoltaic module in the third-level laminating unit 20, with reference to FIG. 4D. It should be noted that descriptions of the operations performed by the third-level laminating unit 20 that are the same as those performed by the first-level laminating unit 10 and the second-level laminating unit 15 are omitted as convenient.

While the laminating process is being performed in the first-level laminating unit 10 and the second-level laminating unit 15, as shown in FIG. 4D the opening and closing devices 25 raise the upper case 23 from the lower case 21 a distance S in order to open the third-level laminating unit 20. At this time, the first-level laminating unit 10 and the second-level laminating unit 15 remain closed and sealed. In addition, the weight of the upper case 23 is supported by the flange members 31, while the weight of the lower case 21, the upper case 18, lower case 16, and the upper case 13 is supported by the lower case 11.

The operator sets a photovoltaic module workpiece 80 on the loading belt 38 of the loading device 35 prior to raising the loading device 35.

In conjunction with the opening of the third-level laminating unit 20, the loading elevator device 40 raises the loading device 35 so that the top surface of the loading belt 38 and the conveyance surface of the conveyor belt 22c of the lower case 21 are flush. With the loading device 35 raised, the height of the sheet cleaning unit 56 of the release sheet cleaning device 55 of the loading device 35, and the height of the roller 24b of the upper case 23 are substantially equal. Similarly, the unloading elevator device 65 raises or lowers the unloading device 60 so that the top surface of the unloading belt 63 and the conveyance surface of the conveyor belt 22c of the lower case 21 are flush. With the unloading device 60 raised, the height of the sheet cleaning unit 76 of the release sheet cleaning device 75 of the unloading device 60, and the roller 24b of the upper case 23 are substantially equal.

Next, the loading device 35 transfers the photovoltaic module set on the loading belt 38 to the conveyor device 22 of the lower case 21. The conveyor belt cleaning device 50 advances the belt cleaning unit 51 and at the same time rotates the belt cleaning unit 51. The release sheet cleaning device 55 advances the sheet cleaning unit 56 and at the same time rotates the sheet cleaning unit 56.

By contrast, when a laminated photovoltaic module is set on the conveyor belt 22c of the lower case 21, the unloading device 60 accepts the photovoltaic module from the conveyor device 22 of the lower case 21. If the sheet cleaning unit 56 on the loading side is advanced and is rotating, the release sheet cleaning device 75 on the unloading side keeps the sheet cleaning unit 76 retracted.

At the lower case 21, the conveyor device 22 places the not-yet-laminated photovoltaic module transferred from the loading device 35 in the center of the laminating unit 20 and at the same time transfers a laminated photovoltaic module to the unloading device 60 when there is a laminated photovoltaic module in the laminating unit 20. When a not-yet-laminated photovoltaic module is placed in the center of the laminating unit 20, as with the first-level laminating unit 10, the conveyance surface of the conveyor belt 22c on which the photovoltaic module is set, is kept free of filler by the action of the conveyor belt cleaning device 50. In addition, when the connecting member 22d with which the conveyor belt 2c is provided, passes the belt cleaning unit 51, the conveyor belt cleaning device 50 retracts the belt cleaning unit 51 so that it does not contact the connecting member 22d.

At the upper case 23, the release sheet device 24 moves the release sheet 24c. Because the connecting member 24d is located near the unloading-side rollers 24b as shown in FIG. 4D, the loading-side sheet cleaning unit 56 advances while the release sheet drive motor 24e moves the release sheet 24c in the direction indicated by the arrows in FIG. 4D. Accordingly, the sheet cleaning unit 56 scrapes off any filler adhering to the sheet surface, such that, after the release sheet 24c stops moving, as with the first-level laminating unit 10, the sheet surface below the diaphragm 23b can be kept free of adhered filler.

Thus, by the operations of the constituent elements described above, a photovoltaic module to be laminated is placed in the center of the third-level laminating unit 20 and preparations for carrying out laminating are completed.

After the photovoltaic module workpiece 80 is delivered to the laminating unit 20 and the work of scraping off any filler adhering to the conveyor belt 22c and the release sheet 24c, which is performed by the conveyor belt cleaning device 50 and the release sheet cleaning devices 55 and 75 is completed, the loading-side release sheet cleaning device 55 retracts the advanced sheet cleaning unit 56 and the conveyor belt cleaning device 50 also retracts the belt cleaning unit 51 in preparation for the next operation.

The loading device 35 is lowered to the position shown in FIG. 4A in order to enable the operator to set the photovoltaic module on the loading belt 38. When there is a laminated photovoltaic module in the third-level laminating unit 20, the unloading device 60, after accepting the photovoltaic module from the conveyor device 22, is lowered to the position shown in FIG. 4A to enable the operator to remove the laminated photovoltaic module from the unloading belt 63. The photovoltaic module is then unloaded to a later stage.

Subsequently, in order to close and seal the third-level laminating unit 20, the opening and closing devices 25 lower the raised upper case 23. Lowering the upper case 23 enables the laminating unit 20 to be sealed. After the laminating unit 20 is sealed, as with the first-level laminating unit 10 described above, laminating is similarly performed in the third-level laminating unit 20.

Next, a description is given of the operation of transferring the laminated photovoltaic module in the first-level laminating unit 10 to the unloading device 60 performed by the laminator 100, with reference to FIG. 4E.

First, in order to open the first-level laminating unit 10, the opening and closing devices 25 raise the upper case 13 a distance S as shown in FIG. 4E. At this time, the second-level laminating unit 15 and the third-level laminating unit 20 remain closed and laminating is carried out.

In conjunction with the opening of the first-level laminating unit 10, the loading elevator device 40 lowers the loading device 35 from its position at the third-level laminating unit 20 so that the top surface of the loading belt 38, and the conveyance surface of the conveyor belt 12c of the lower case 11, are flush. An operator will have previously placed the next photovoltaic module workpiece 80 to be laminated in the first-level laminating unit 10 on the loading belt 38. Similarly, the unloading elevator device 65 lowers the unloading device 60 from its position at the third-level laminating unit 20 so that the top surface of the unloading belt 63, and the conveyance surface of the conveyor belt 12c of the lower case 11, are flush.

Next, the loading device 35 transfers the photovoltaic module workpiece 80 set on the loading belt 38 to the conveyor device 12 of the lower case 11.

The conveyor belt cleaning device 50 advances the belt cleaning unit 51 and at the same time rotates the belt cleaning unit 51. The release sheet cleaning device 55, because it advanced the sheet cleaning unit 56 when the release sheet 14c moved the previous time (see FIG. 4A), this time keeps the sheet cleaning unit 56 retracted.

By contrast, the unloading device 60 accepts the laminated photovoltaic module from the conveyor device 12 of the lower case 11. In addition, because the sheet cleaning unit 56 on the loading side described above has remained retracted, the release sheet cleaning device 75 advances and at the same time rotates the sheet cleaning unit 76.

Next, at the lower case 11, the conveyor device 12 places the not-yet-laminated photovoltaic module transferred from the loading device 35 in the center of the laminating unit 10 and at the same time transfers the laminated photovoltaic module in the laminating unit 10 to the unloading device 60. At this time, the conveyor device 12 moves the conveyor belt 12c approximately half a cycle, so that the portion of the conveyor belt 12c, which is positioned above the heating plate 11b, is then positioned below the lower case 11. Accordingly, the conveyance surface of the conveyor belt 12c, to which filler spilled out by the laminating process is adhered, is moved to a position below the lower case 11.

With the laminator 100 according to the present embodiment, the filler is not heated until the filler completely crosslinks but only until the filler reaches a half-crosslinked state. In other words, when the laminating process is completed, any filler sediment that has spilled out from the module during the laminating process and is adhering to the conveyance surface of the conveyor belt 12c is not hardened but remains viscous. Therefore, by moving that portion of the conveyor belt 12c to which filler sediment adheres to a position below the lower case 11, the filler sediment adhering to the conveyor belt 12c can be allowed to harden while the next photovoltaic module is being laminated. By hardening the filler sediment in this manner, when the conveyor belt 12c is moved approximately half a cycle so as to position that portion of the conveyor belt 12c, which was below the lower case 11, above the heating plate 11b, the belt cleaning unit 51 can easily scrape off the filler sediment, thus ensuring that a conveyance surface free of filler sediment is positioned above the heating plate 11b.

Next, at the upper case 13, the release sheet device 14 moves the release sheet 14c. Because the connecting member 14d is located near a loading-side roller 14b as shown in FIG. 4E, the unloading-side sheet cleaning unit 76 advances while the release sheet drive motor 14e moves the release sheet 14c in the direction indicated by the arrows in FIG. 4E. In other words, the release sheet device 14 moves the release sheet 14c approximately half a cycle, so that the portion of the release sheet 14c, which is positioned below the diaphragm 13b, is then positioned above the upper case 13. Accordingly, the conveyance surface of the conveyor belt 12c, to which filler spilled out by the laminating process is adhered, is moved to a position above the upper case 13.

Thus, as described above, with the laminator 100 according to the present embodiment, the filler is not heated until the filler completely crosslinks but only until the filler reaches a half-crosslinked state. In other words, when the laminating process is completed, any filler sediment that has spilled out from the module during the laminating process and is adhering to the conveyance surface of the release sheet 14c is not hardened but remains viscous. Therefore, by moving that portion of the release sheet 14c to which filler sediment adheres to a position above the upper case 13, the filler sediment can be hardened while the next photovoltaic module is being laminated. By hardening the filler sediment adhering to the release sheet 14c in this manner, when the release sheet 14c is moved approximately half a cycle so as to position that portion of the release sheet 14c, which is above the upper case 13, below the diaphragm 13b, the unloading-side sheet cleaning unit 76 or the loading-side sheet cleaning unit 56 can easily scrape off the filler sediment, thus ensuring that a conveyance surface that is free of filler sediment is positioned below the diaphragm 13b.

Thereafter, once laminating in the laminating units as described above is finished, the laminated photovoltaic modules are successively unloaded and successively loaded, and laminating carried out at will in the laminating units. The above described processing sequence is accomplished by a control device, not shown, which controls the constituent elements of the laminator 100. The photovoltaic modules laminated at the laminator 100 are then send to a post-laminating stage in which they are conveyed to a curing oven to completely crosslink the filler.

Thus, as described above, with the present embodiment, a plurality of vertically stacked laminating units can carry out lamination in a mutually independent fashion. Therefore, since lamination of one photovoltaic module is performed at will, there is no need for large stocks of photovoltaic modules to be on hand before laminating, thus enabling the lead time required for photovoltaic module production to be shrunk and the amount of space needed for laminator installation to be reduced.

In addition, so that the plurality of vertically stacked laminating units can carry out lamination mutually independently, the laminating units can be opened and closed at will. Therefore, compared to opening and closing all the laminating units at the same time, the laminator 100 according to the present embodiment requires less overhead space, which in turn, allows more laminating units to be stacked and reduces the space required for the photovoltaic module production line. Furthermore, by adding more stacked laminating units, the production capacity of the laminator can be increased.

Moreover, the laminator is provided with a conveyor belt cleaning device that scrapes off any filler sediment adhering to the conveyance surface of the conveyor belt 12c, thereby preventing filler sediment from adhering to the workpiece during lamination. In addition, the laminator is provided with a release sheet cleaning device that scrapes off any filler sediment adhering to the surface of the release sheet, thereby preventing filler sediment from adhering to the workpiece during lamination. Therefore, the work of removing any filler sediment adhering to the workpiece 80 is eliminated, thus improving production efficiency.

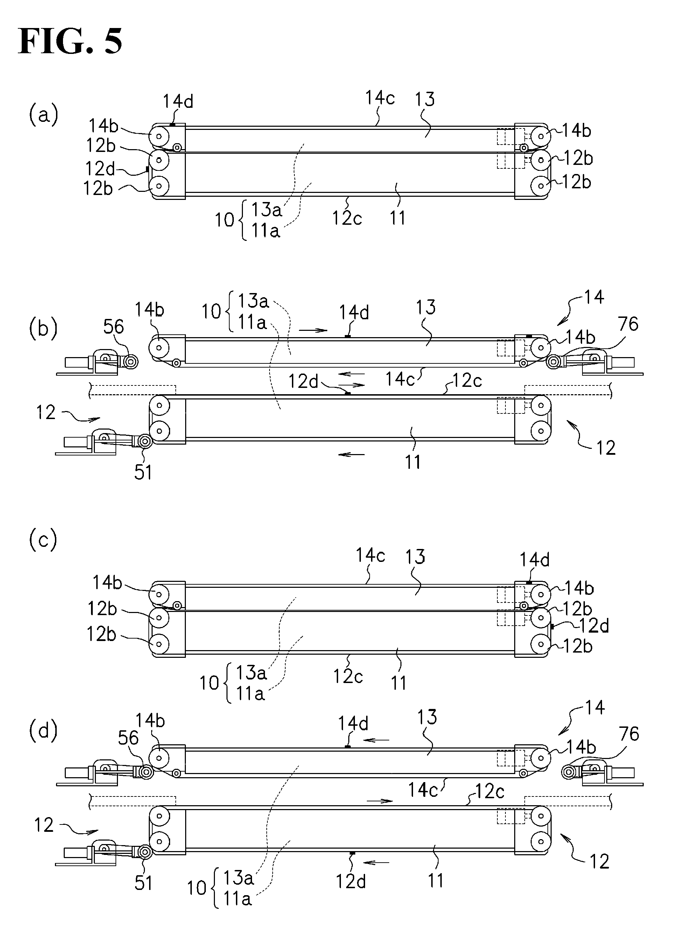

Next, using FIG. 5, a description is given of the movement of the conveyor belt 12c and the release sheet 14c using only the first-level laminating unit 10.

First, FIG. 5A is a diagram showing a photovoltaic module being laminated. Here, filler that has spilled out during the laminating process is adhering to that portion of the conveyance surface of the conveyor belt 12c which is positioned above the heating plate, that is, the portion of the conveyance surface that is being pressed between the upper case 13 and the lower case 11. At the same time, filler adhering to the portion of the conveyance surface of the conveyor belt 12c positioned below the lower case 11, is hardening. At this time, the connecting member 12d of the conveyor belt 12c is positioned between the loading-side rollers 12b.

In addition, filler that has spilled out during the laminating process is adhering to the portion of the surface of the release sheet 14c positioned below the diaphragm, that is, that portion of the conveyance surface that is being pressed between the upper case 13 and the lower case 11. At the same time, filler adhering to the portion of the surface of the release sheet 14c positioned above the upper case 13, is hardening. At this time, the connecting member 14d of the release sheet 14c is positioned near the loading-side rollers 14b.

Next, FIG. 5(b) is a diagram showing one photovoltaic module that has just been laminated, being unloaded from the laminating unit 10 and another photovoltaic module that is about to be laminated, being delivered to the laminating unit 10.

The conveyor device 12 moves the conveyor belt 12c in the direction indicated by the arrows in FIG. 5(b) so as to transport the photovoltaic module. At this time, the belt cleaning unit 51 advances and scrapes off any hardened filler adhering to the conveyance surface of the conveyor belt 12c. The conveyor device 12 moves the conveyor belt 12c approximately half a cycle so as to move the conveyance surface, from which the filler has been scraped off, to a position above the lower case 11, and the conveyance surface, to which filler adheres but has not yet hardened, to a position below the lower case 11.

In addition, the sheet device 14 moves the release sheet 14c in a direction so that the connecting member 14d does not contact the rollers 14b, that is, in the direction indicated by the arrows in FIG. 5(b). At this time, the unloading-side sheet cleaning unit 76 advances and scrapes off any filler adhering to the sheet surface. By contrast, the loading-side sheet cleaning unit 56 does not advance but remains retracted. The sheet device 14 moves the release sheet 14c approximately half a cycle so as to move the sheet surface, from which filler has been scraped off, to a position below the upper case 13, and the surface to which filler adheres but has not yet hardened, to a position above the upper case 13.

Next, FIG. 5(c) is a diagram showing the state during the lamination process of a photovoltaic module that has just been delivered after the operation shown in FIG. 5(b). As in FIG. 5(a), filler is adhering to the portion of the conveyance surface of the conveyor belt 12c that is pressed between the upper case 13 and the lower case 11. At the same time, filler adhering to the portion of the conveyance surface of the conveyor belt 12c positioned below the lower case 11, is hardening. However, unlike FIG. 5(a), the conveyor belt 12c has moved approximately half a cycle, so that the connecting member 12d is positioned between the unloading-side rollers 12b.

In addition, as in FIG. 5(a), filler is adhering to the portion of the sheet surface of the release sheet 14c that is pressed between the upper case 13 and the lower case 11. At the same time, filler adhering to the portion of the sheet surface of the release sheet 14c positioned above the upper case 13, is hardening. However, unlike FIG. 5(a), the release sheet 14c has moved approximately half a cycle, so that the connecting member 14d is positioned near the unloading-side rollers 14b.

Next, FIG. 5(d) is a diagram showing a photovoltaic module that has just been laminated, being discharged from the laminating unit 10, and a photovoltaic module that is to be laminated, being delivered to the laminating unit 10.

The conveyor device 12 moves the conveyor belt 12c in the direction indicated by the arrows in FIG. 5(d) so as to transport the photovoltaic module. At this time, the belt cleaning unit 51 advances and scrapes off any hardened filler adhering to the conveyance surface of the conveyor belt 12c. The conveyor device 12 moves the conveyor belt 12c approximately half a cycle so as to move the conveyance surface, from which the filler has been scraped off, to a position above the lower case 11 and the conveyance surface to which filler adheres but has not yet hardened, to a position below the lower case 11. It should be noted that, when the connecting member 12d with which the conveyor belt 12c is provided passes the belt cleaning unit 51, the belt cleaning unit 51 is temporarily retracted so that it does not contact the connecting member 12d.

In addition, the sheet device 14 moves the release sheet 14c in a direction so that the connecting member 14d does not contact the rollers 14b, that is, in the direction indicated by the arrows in FIG. 5(d). At this time, the loading-side sheet cleaning unit 56 advances and scrapes off any filler adhering to the sheet surface. By contrast, the unloading-side sheet cleaning unit 76 does not advance but remains retracted. The sheet device 14 moves the release sheet 14c approximately half a cycle so as to move the sheet surface, from which filler has been scraped off, to a position below the upper case 13 and the surface to which filler adheres but has not yet hardened, to a position above the upper case 13.

Thus, according to the above-described present embodiment, the loading-side sheet cleaning unit or the unloading-side sheet cleaning unit advances that sheet cleaning unit which can scrape off hardened filler, enabling the sheet cleaning unit to scrape off filler with ease.

It should be noted that although in the above-described embodiment a description is given of a 3-level construction of the laminating units, the present invention is not limited thereto. Thus, provided there are at least two levels, any number of levels may be employed. In addition, although in the present embodiment a description is given of half-cross linking of the filler, again, the present invention is not limited thereto and is applicable also to a case in which the filler is completely crosslinked.

### (Second Embodiment)

According to the present embodiment of the laminator, the filler of the photovoltaic module is heated until completely cross-linked, with an easy cleaning process provided should sediment from the filler spill out.

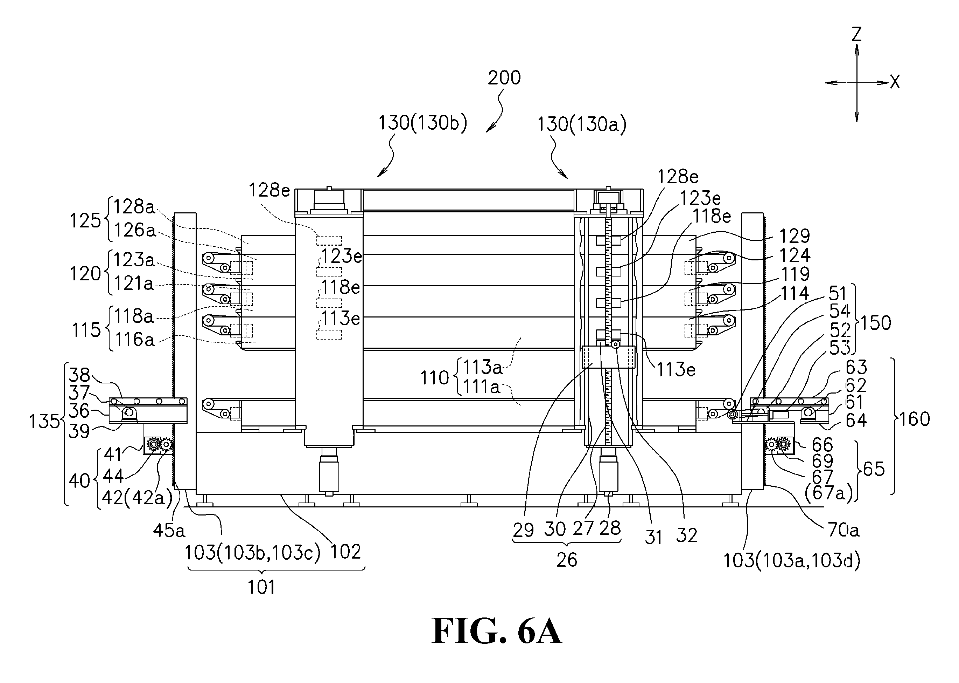

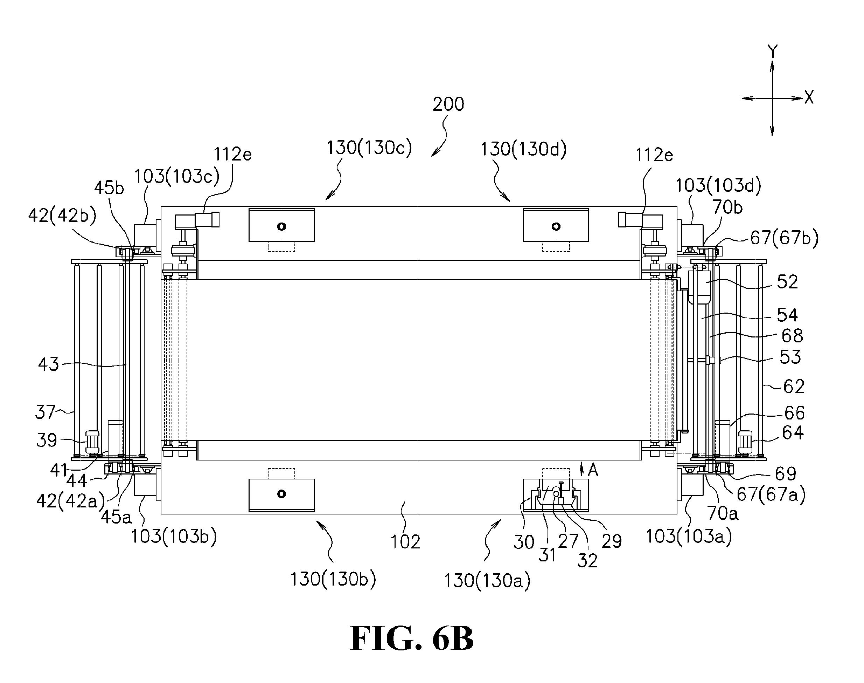

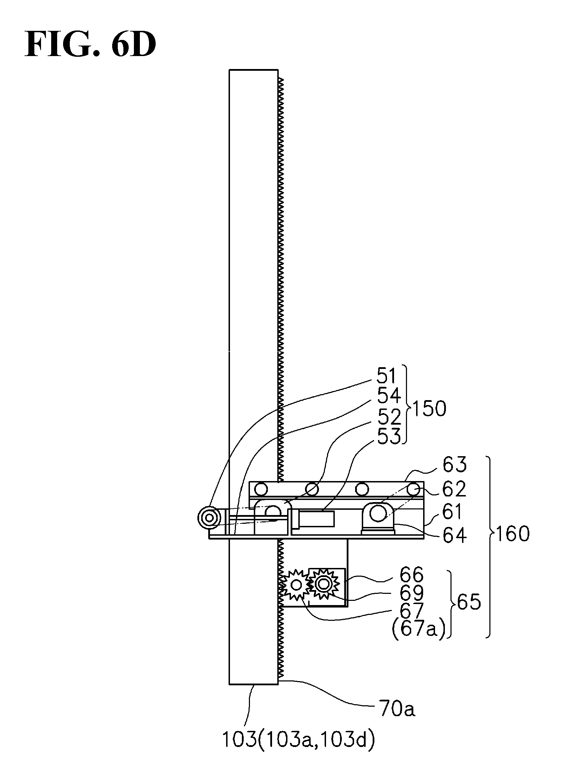

FIG. 6A shows a frontal view of a laminator 200 according to the present embodiment. FIG. 6B shows a plan view of Laminator 200 according to the present embodiment. In both FIGS. 6A and 6B, the X-axis represents the width direction, the Y-axis represents the depth direction, and the Z-axis represents the height direction.

The laminator 200 is comprised of a frame 101, a plurality of laminating units 110, 115, 120, 125, an opening and closing device 135 which acts upon the laminating units 110, 115, 120, 125, a loading device 135 which delivers photovoltaic modules individually to the laminating units 110, 115, 120, 125, and a unloading device 160 which discharges photovoltaic modules transported individually from the laminating units 110, 115, 120, and 125.

The frame 101 includes a base 102 with legs set on the floor and four posts extending vertically from both end surfaces of the base 102 in the width direction thereof (see FIG. 6B). Provided that the height dimensions of the laminator permit, it is possible to install more than four laminating units.

The laminating units 110, 115, 120, and 125 are disposed horizontally parallel on the top surface of the base 102. Furthermore, the laminating units 110, 115, 120, and 125 are disposed between the four opening and closing devices 130a-130d that project vertically from the base 102 (refer to figure 6B). Here, the laminating units of the present embodiment are composed as 4 vertically stacked levels. Specifically, the laminator 200 is comprised of the laminating unit 110 as the first level above the base 102, the laminating unit 115 as the second level, the laminating unit 120 as the third level, and the laminating unit 125 as the fourth level.

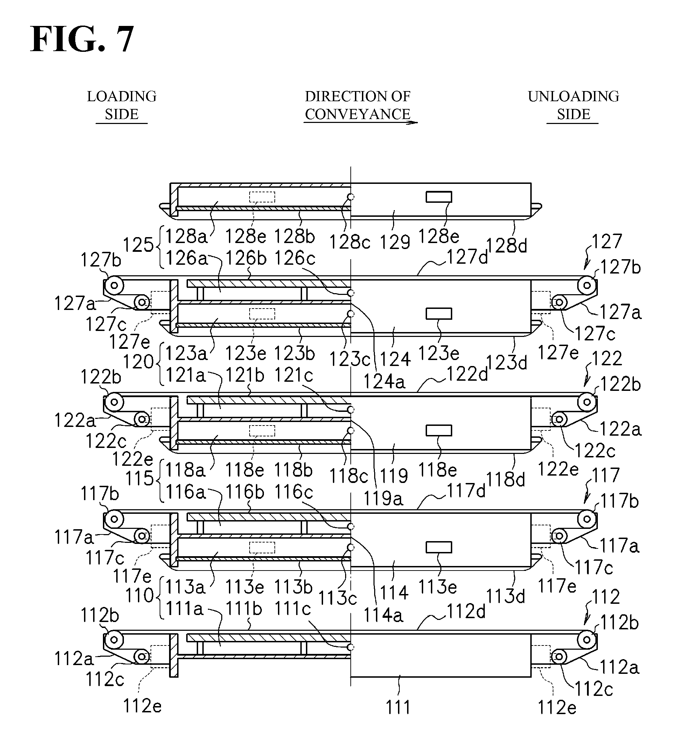

Here, a detailed description is given of the laminating units 110, 115, 120, and 125, referring to FIG. 7. FIG. 7 shows a frontal view of a partial cross-section of the laminating units 110, 115, 120, and 125. In FIG. 7, the elements that constitute the laminating units 110, 115, 120, and 125 are shown separated. In addition, the laminating units 110, 115, 120, and 125 are shown shortened horizontally in FIG. 7.

First, a description is given of the first-level laminating unit 110. The first-level laminating unit 110 is comprised of a lower chamber 111a formed in case 111 and an upper chamber 113a formed in case 114.

There is an open space towards the top of case 111, in other words where the lower chamber 111a is formed. The lower chamber 111a contains a heating plate 111b and a vacuum/discharge port 111c.

A conveyor device 112 is provided in case 111. The conveyor device 112 is comprised of a conveyor roller support structure 112a, two conveyor rollers 112b, two wind-up rollers 112c, a conveyor belt 112d that is wrapped around the conveyor rollers 112b, and two conveyor belt drive motors 112e.

The top surface of conveyor belt 112d located above heating plate 111b, is the conveyance surface for the photovoltaic modules. The conveyor device 112 of the present embodiment, when the conveyor belt drive motor 112e rotates, the conveyor belt 112d that is wrapped up several times on to the loading- side wind-up roller 112c travels via the conveyor roller 112b and gets wound up onto the unloading-side wind-up roller 112c. The photovoltaic module that has been placed on the surface of the conveyor belt 112d is transported via this motion. It should be noted that after conveyor belt 112d has been wrapped up several times and runs out of belting, the unloading-side conveyor belt drive motor is used to return and re-wrap the conveyor belt 112d.

There is an open space towards the bottom of case 114, in other words where the upper chamber 113a is formed. Here, the case 114 of the present embodiment constitutes a single integrated unit made up of the upper chamber 113a and the lower chamber 116a forming the upper level laminating unit 115. The separator plate 114a divides the space inside Case 114. The upper chamber 113a forming the first-level laminating unit 110 is below the separator plate 114a. The lower chamber 116a forming the second-level laminating unit 115 is above the separator plate 114a. In this way case 114 is comprised of the upper chamber 113a forming laminating unit 110 and the upper chamber 116a forming the laminating unit 115 as the level above laminating unit 110, and configured as a single integrated box-like frame.

A diaphragm 113b, a vacuum/discharge port 113c, and support 113e are provided in the upper chamber 113a. In each of both lateral side surfaces of the upper case 114 in the depth direction thereof are provided two supports 113e, separated from each other in the width direction of the upper chamber 113a. Each of the support 113e is disposed so that it horizontally protrudes from case 114.

A release sheet 113d is provided so as to block the opening on the bottom side of upper chamber 113a in case 114. The release sheet is affixed at the edges of case 114 on both sides in the width direction.

Here, by lowering the case 114 (which forms a single integrated unit with the lower chamber 116a of the second level), positioning it at the case 111, and setting it on the case 111 so that the two cases are stacked one on top of the other, the laminating unit 110 comprised of the upper chamber 113a and the lower chamber 111a can be closed and sealed. In contrast, by raising the case 114 from sealed state, the laminating unit 110 comprised of the lower chamber 111a and the upper chamber 113a can be opened.

Next, a description is given of the second-level laminating unit 115. The second-level laminating unit 115 is comprised of a lower chamber 116a formed in case 114, and an upper chamber 118a formed in case 119. Here, a detailed description of the constituent elements of the second-level laminating unit 115 is omitted because the constituent elements are the same as for the above described first-level laminating unit 110.

There is an open space towards the top of case 114, in other words where the lower chamber 116a is formed, in the same way as above mentioned. A heating plate 116b and a vacuum/discharge port 116c are provided in the lower chamber 116a

A conveyor device 117 is provided in case 114. The conveyor device 117 is comprised of a conveyor roller support 117a, conveyor rollers 117b, wind-up rollers 117c, a conveyor belt 117d, and conveyor belt drive motor 117e.

There is an open space towards the bottom of case 119, in other words where the upper chamber 118a is formed. In addition, the upper chamber 118a forming the second-level laminating unit 115 is below the separator plate 119a of case 119. The lower chamber 121a forming the third-level laminating unit 120 is above the separator plate 119a.

A diaphragm 118b, a vacuum/discharge port 118c, and support 118e are provided in the upper chamber 118a. A release sheet 118d is provided in case 119 to block the opening at the bottom of the upper chamber 118a.

Here, by lowering the case 119 (which forms a single integrated unit with the lower chamber 121a of the third level), positioning it at the case 114, and setting it on the case 114 so that the two cases are stacked one on top of the other, the laminating unit 115 comprised of the upper chamber 118a and the lower chamber 116a can be closed and sealed. In contrast, by raising the case 119 from sealed state, the laminating unit 115 comprised of the lower chamber 116a and the upper chamber 118a can be opened.

Next, a description is given of the third-level laminating unit 120. The third-level laminating unit 120 is comprised of a lower chamber 121a formed in case 119, and an upper chamber 123a formed in case 124. Here, a detailed description of the constituent elements of the third-level laminating unit 120 is omitted because the constituent elements are the same as for the above described first-level laminating unit 110.

There is an open space towards the top of case 119, in other words where the lower chamber 121a is formed, in the same way as above mentioned. A heating plate 121b and a vacuum/discharge port 121c are provided in the lower chamber 121a.

A conveyor device 122 is provided in case 119. The conveyor device 122 is comprised of a conveyor roller support 122a, conveyor rollers 122b, wind-up rollers 122c, a conveyor belt 122d, and conveyor belt driver motor 122e.

There is an open space towards the bottom of case 124, in other words where the upper chamber 123a is formed. In addition, the upper chamber 123a forming the third-level laminator part 120 is below the separator plate 124a of case 124. The lower chamber 126a forming the fourth-level laminating unit 125 is above the separator plate 124a.

A diaphragm 123b, a vacuum/discharge port 123c, and support 123e are provided in the upper chamber 123a. A release sheet 123d is provided in case 124 to block the opening at the bottom of the upper chamber 123a.

Here, by lowering the case 124 (which forms a single integrated unit with the lower chamber 126a of the fourth level), positioning it at the case 119, and setting it on the case 119 so that the two cases are stacked one on top of the other, the laminating unit 120 comprised of the upper chamber 123a and the lower chamber 121a can be closed and sealed. In contrast, by raising the case 124 from sealed state, the laminating unit 120 comprised of the lower chamber 121a and the upper chamber 123a can be opened.

Next, a description is given of the fourth-level laminating unit 125. The fourth-level laminating unit 125 is comprised of a lower chamber 126a formed in case 124, and an upper chamber 128a formed in case 129. Here, a detailed description of the constituent elements of the fourth-level laminating unit 125 is omitted because the constituent elements are the same as for the above mentioned first-level laminating unit 110.

There is an open space towards the top of case 124, in other words where the lower chamber 126a is formed, in the same way as above mentioned. A heating plate 126b and a vacuum/discharge port 126c are provided in the lower chamber 126a.

A conveyor device 127 is provided in case 124. The conveyor device 127 is comprised of a conveyor roller support 127a, conveyor rollers 127b, wind-up rollers 127c, a conveyor belt 127d, and conveyor belt drive motor 127e.

There is an open space towards the top of case 129, in other words where the lower chamber 128a is formed. It should be noted that there is no laminating unit above the fourth-level laminating unit 125, so case 129 does not have an integrated lower chamber.

A diaphragm 128b, a vacuum/discharge port 128c, and support 128e are provided in the upper chamber 128a. A release sheet 128d is provided in case 129 to block the opening at the bottom of the upper chamber 128a.

Here, by lowering the case 129, positioning it at the lower case 124, and setting it on the case 124 so that the two cases are stacked one on top of the other, the laminating unit 125 comprised of the upper chamber 128a and the lower chamber 126a can be closed and sealed. In contrast, by raising the case 129 from sealed state, the laminating unit 125 comprised of the lower chamber 126a and the upper chamber 128a can be opened.

Next, a description is given of the opening and closing devices 130, with reference to FIGS. 6A and 6B. The opening and closing device 130 can open and close any of the laminating units 110, 115, 120, and 125 arbitrarily. The four opening and closing devices 130 are set apart at corresponding opposed positions on the base 102. Here, the opening and closing devices 130a -130d all have the same configuration, so only the opening and closing device 130a is shown with its outer cover partially cut away in FIGS. 6A and 6B. Furthermore, because the opening and closing devices 130 are composed exactly the same as the opening and closing devices 25 in the first embodiment, and use the same reference character, a detailed description thereof is omitted.

The same as in the first embodiment, when the flange members 31 are positioned below the supports 113a in case 114 and the opening and closing device 130 raises elevator members 29, the first-level laminating unit 110 can be opened (see FIG. 6A). At this time, the weight of case 129, case 124, case 119, and case 114 is supported by the flange members 31. By contrast, when the opening and closing device 130 lowers the elevating members 29 from the state of the first-level laminating unit 110 opened, the first-level laminating unit 110 can be closed.

When the flange members 31 are positioned below the supports 118a of case 119 and the opening and closing device 130 raises the elevator members 29, the second-level laminating unit 115 can be opened. At this time, the weight of case 129, case 124, and case 119 is supported by the flange members 31. By contrast, when the opening and closing device 130 lowers the elevating members 29 from the state of the second-level laminating unit 115 opened, the second-level laminating unit 115 can be closed.

When the flange members 31 are positioned below the supports 123e of case 124 and the opening and closing device 130 raises the elevator members 29, the third-level laminating unit 120 can be opened. At this time, the weight of case 129 and case 124 is supported by the flange members 31. By contrast, when the opening and closing device 130 lowers the elevating members 29 from the state of the third-level laminator part 120 opened, the third-level laminating unit 120 can be closed.

When the flange members 31 are positioned below the supports 128a of case 129 and the opening and closing device 130 raises the elevator members 29, the fourth-level laminating unit 125 can be opened. At this time, the weight of case 129 is supported by the flange members 31. By contrast, when the opening and closing device 130 lowers the elevating members 29 from the state of the fourth-level laminating unit 125 opened, the fourth-level laminating unit 125 can be closed.

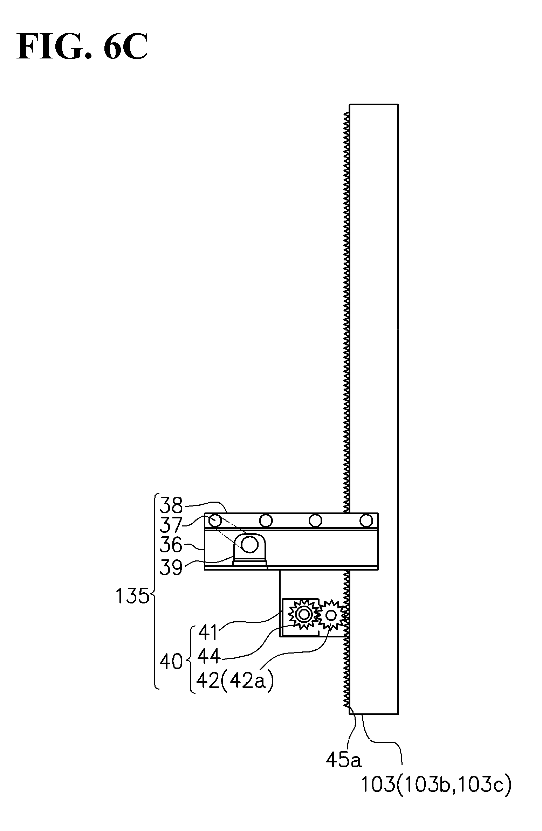

Next, a description is given of the loading device 135 with reference to FIGS. 6A, 6B, and 6C. It should be noted that FIG. 6C shows an enlarged view of the configuration of the loading device 135. The loading device 35 delivers not-yet-laminated photovoltaic modules into the laminating units 110, 115, 120, and 125 opened by the opening and closing device 130. It should be noted that a detailed description of the constituent elements of the loading device 135 being the same as for the first embodiment with the same reference characters, is omitted.

The loading device 135 has a box-like housing 36, loading rollers 37, a loading belt 38, a loading roller drive motor 39, and a loading elevator device 40. A belt is wound around the output shaft of the loading roller drive motor 39 and one of the loading rollers 37. As the loading roller drive motor 39 rotates, the placement surface of the loading belt 38 can be moved toward the laminating units.

The loading elevator device 40 can raise and lower the loading device 35 to match with the laminating unit opened by the opening and closing device 130. The loading elevator device 40 has loading elevator motor 41, and pinions 42a and 42b (see FIG. 6B). By driving the loading elevator motor 41, pinion 42a, and pinion 42b which is coupled to pinion 42a via shaft 43, can be rotated. As pinions 42a and 42b rotate, they engage racks 45a and 45b provided on support posts 103b and 103c, and the loading device 135 can be raised and lowered along the support posts 103b and 103c.

Next, a description is given of the unloading device 160 with reference to FIG. 6A, FIG. 6B, and FIG. 6C. It should be noted that FIG. 6C shows an enlarged view of the configuration of the unloading device 160. The unloading device 160 discharges laminated photovoltaic modules from the laminating units 110, 115, 120, and 125 opened by the opening and closing device 130. It should be noted that a detailed description of the constituent elements of the unloading device 160, being the same as for the first embodiment with the same reference characters, is omitted.

The unloading device 160 has a box-like housing 61, a plurality of unloading rollers 62, an unloading belt 63, an unloading roller drive motor 64, an unloading elevator device 65, and an unloading belt cleaning device 150. A belt is wound around the output shaft of the unloading roller drive motor 64 and one of the unloading rollers 62. As the unloading roller drive motor 64 rotates, the placement surface of the unloading belt 38 can be moved away from the laminating units.

The unloading elevator device 65 can raise and lower the unloading device 160 to match with the laminating unit opened by the opening and closing device 130. The unloading elevator device 65 has an unloading elevator motor 66, and pinions 67a and 67b (see FIG. 6B). By driving the unloading elevator motor 66, pinion 67a, and pinion 67b which is coupled to pinion 67a via shaft 68, can be rotated. As pinions 67a and 67b rotate, they engage racks 70a and 70b provided on support posts 103a and 103d, and the unloading device 160 can be raised and lowered along the support posts 103a and 103d.

Next, a description is given of the conveyor belt cleaning device 150. The conveyor belt cleaning device 150 can scrape off filler sediment adhering to the conveyance surface of the conveyor belt. The conveyor belt cleaning device 150 has a belt cleaning unit 51, a cleaning unit rotation motor 52, and a cleaning unit advancement/retraction device 53. The belt cleaning unit 51 is shaped like a roller, along whose entire circumferential surface is stuck a brush that scrapes off filler sediment adhering to the conveyor belt. The belt cleaning unit 51 is disposed so that longer direction thereof is aligned in the depth direction, and is rotatably mounted on a support plate 54 of the box-like housing 61. The cleaning unit rotation motor 52 is similarly mounted on the support plate 54 like the belt cleaning unit 51. By rotating the cleaning unit rotation motor 52, the belt cleaning unit 51 can be rotated.

The cleaning unit advancement/retraction device 53 may be an air cylinder, for example, provided at a center of the box-like housing 61 in the depth direction thereof (see FIG. 6B). The cleaning unit advancement/retraction device 53 horizontally advances and retracts the support plate 54 that supports the belt cleaning unit 51 and the cleaning unit rotation motor 52. As the cleaning unit advancement/retraction device 53 advances the support plate 54, the belt cleaning unit 51 can be pressed against the conveyance surface of the conveyor belt as shown in FIG. 6A. With the belt cleaning unit 51 pressed against the conveyance surface of the conveyor belt, as the conveyor belt is moved, the belt cleaning unit 51 is rotated by the cleaning unit rotation motor 52, enabling the belt cleaning unit 51 to remove filler sediment adhering to the conveyance surface of the conveyor belt. When the cleaning unit advancement/retraction device 53 retracts the support plate 54, the belt cleaning unit 51 can be separated from the conveyance surface of the conveyor belt.

Because the unloading elevator device 150 is set within the box-like housing 61 in which the unloading elevator device 65 is disposed, the conveyor belt cleaning device 150 ascends and descends in synchrony with the ascent and descent of the unloading device 160. It should be noted that the cleaning unit advancement/retraction device 53 of the conveyor belt cleaning device 150 retracts the belt cleaning unit 51 so that the belt cleaning unit 51 does not hit the conveyor belt while the unloading device 160 is ascending or descending.

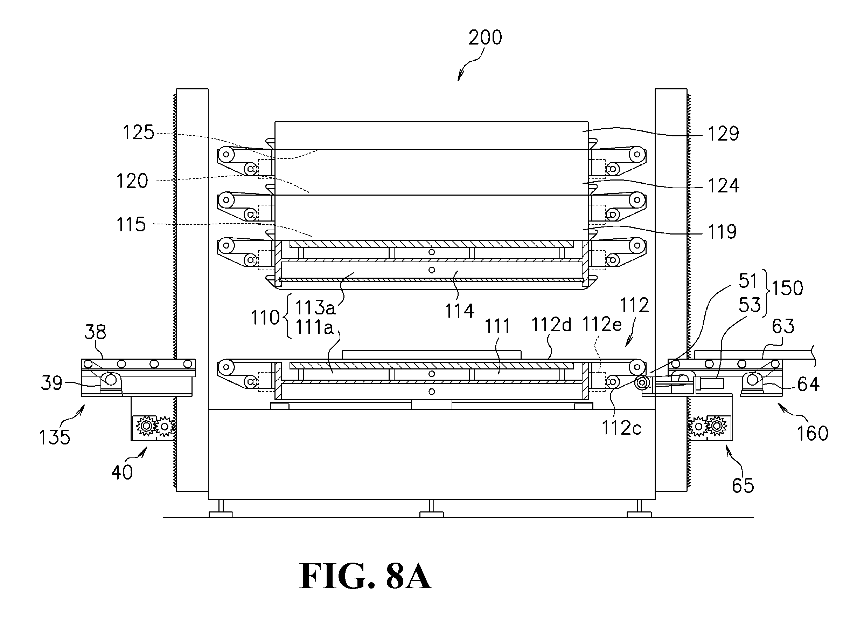

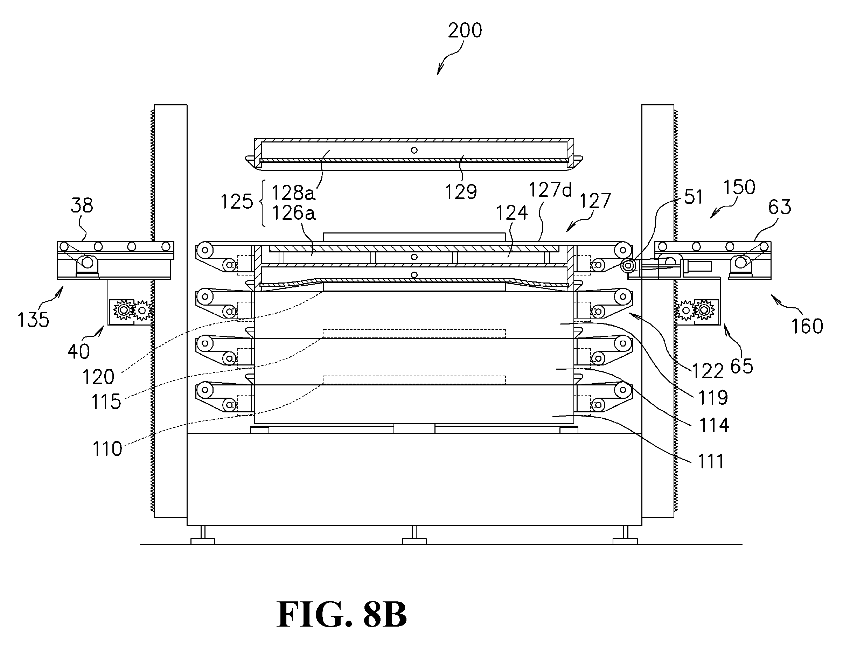

Next, a description is given of the operations performed by the laminator 200 to carry out the laminating process, with reference to FIG. 8A and FIG. 8B. It should be noted that in FIGS. 8A and 8B the laminator 200 is shown with the opening and closing device 130 omitted. The description starts from a state in which there are no photovoltaic modules in the first- through fourth-level laminating units 110, 115, 120, and 125.

First, a description is given of the laminator 200 delivering photovoltaic modules to be laminated in the first-level laminating unit 110, with reference to FIG. 8A.

From an originating state in which the upper cases and the lower cases are stacked on top of each other, the opening and closing device 130 raises the case 114 in order to open the first laminating unit 110, as shown in FIG. 8A. At this time, the second-level laminating unit 115, the third-level laminating unit 120, and the fourth-level laminating unit 125 remain closed and sealed, with the weight of case 129, case 124, case 119, and case 114 borne by the flange member 31.

In conjunction with the opening of the first-level laminating unit 110, the loading elevator device 40 raises or lowers the loading device 135 so that the top surface of the loading belt 38 and the conveyance surface of the conveyor belt 112d of the lower case 111 are flush. It should be noted that an operator has previously placed the photovoltaic module to be laminated in the first-level laminating unit 110 on the top surface of loading belt 38. The unloading elevator device 65 raises or lowers the unloading device 160 so that the top surface of the unloading belt 63 and the conveyance surface of the conveyor belt 112d of the case 111 are flush. While the unloading elevator device 65 is raising or lowering the unloading device 160, the cleaning unit advancement/retraction device 53 retracts the conveyor belt cleaning unit 51.

Next, at the loading device 135, the loading roller drive motor 39 moves the top surface of the loading belt 38 to the first-level laminating unit 110 side, thereby enabling the loading device 135 to transfer the photovoltaic module placed on the top surface of the loading belt 38 to the conveyor device 112 of case 111.

By contrast, at the unloading device 160, the unloading roller drive motor 64 moves the top surface of the unloading belt 63 away from the first-level laminating unit 110. Here, in a case in which there is a laminated photovoltaic module set on the conveyor belt 112d of the case 111, the laminated photovoltaic module can be accepted from the conveyor device 112 of case 111. It should be noted that, at unloading conveyor belt cleaning device 150, while the conveyor belt cleaning unit 51 advances, the conveyor belt cleaning unit 51 rotates.

At case 111, the conveyor belt drive motor 112e moves the conveyance surface of the conveyor belt 112d from the loading device 135 side to the unloading device 160 side, thereby enabling the conveyor device 112 to place the not-yet-laminated photovoltaic module transferred from the loading device 135 in the center of the laminating unit 110 as well as transfer a laminated photovoltaic module to the unloading device 160 in a case in which there is a laminated photovoltaic module in the laminating unit 110.

At this point, immediately prior to the conveyor belt 112d moving, in the case where a laminated photovoltaic module is present, filler that has spilled out from the photovoltaic module during the laminating process, has adhered onto the conveyance surface of the conveyor belt 112d. In addition, as described above, at the conveyor belt cleaning device 150, the belt cleaning unit 51 is advanced, pressed against the conveyance surface of the conveyor belt 112d, and rotates. Accordingly, when the conveyor belt 112d is moving and being wound up by the wind-up roller 112c, the conveyor belt cleaning unit 51 can scrape off the filler adhering to the conveyance surface. It should be noted that for the present embodiment of the laminator 200, the filler is heated until the filler is completely cross-linked. In other words, at the point in time when lamination is completed, because the filler that has spilled out from the lamination process and adhered to the conveyance surface of conveyor belt 112d hardens, the belt cleaning unit 51 can easily scrape off the filler.

It should be noted that at case 114, the release sheet 113d is only anchored, so the release sheet 113d is replaced or otherwise taken care of when dirty from the laminating process.

Next, in order for the opening and closing device 130 to close and seal the first-level laminating unit 110, the opening and closing device 130 lowers the raised case 114. Lowering the case 114 enables the first-level laminating unit 110 to sealed. It should be noted that conveyor belt cleaning device 150 retracts belt cleaning unit 51 in preparation for the next operation. After that, laminating is performed to the photovoltaic module that has been placed in the first-level laminating unit 110. It should be noted that because the lamination process is the same as for the first embodiment, details are omitted.

While the laminating process is performed in the first-level laminating unit 110 in the laminator 200, photovoltaic modules is placed in the second-level laminating unit 115 and laminating process is performed. At the same time, while the laminating process is performed in the first-level lamination unit 110 and the second-level lamination unit 115, photovoltaic modules is placed in the third-level lamination unit 120, and laminating process is performed at any time. It should be noted that the details of the operations for delivering photovoltaic module for each laminating unit, the loading device 135, and the unloading device 160 are the same as in the first embodiment, and are therefore omitted.

Next, a description is given with reference to FIG. 8B, of the operations by which photovoltaic modules are placed in the fourth-level laminating unit 125 and laminating process is performed, while the lamination process is performed in the first-level laminating unit 110, the second-laminating unit 115, and the third-level laminating unit 120. It should be noted that in the description of the operations which is performed in the fourth-level laminating unit 125, that are the same as those which is performed in the first-level laminating unit 110 are omitted where appropriate.

It should be noted that after the photovoltaic module has been delivered to third-level laminating unit 120, the loading device 135 descends to the position shown in FIG. 8A, so that an operator can set a new photovoltaic module onto the top surface of the loading conveyor belt 38. In addition, in the case in which a laminated photovoltaic module is present in the third-level laminating unit 120, the unloading device 160, after accepting the photovoltaic module from the conveyor device 122, lowers to the position shown in FIG. 8A so that an operator can remove the laminated photovoltaic module.

Next, while the lamination process is performed in the first-level laminating unit 110, the second-level laminating unit 115, and the third-level laminating unit 120, the opening and closing device 130 raise the case 129 in order to open the fourth-level laminating unit 125 as shown in FIG. 8B. At this time, the first-level laminating unit 110, the second-level laminating unit 115, and the third-level laminating unit 120 remain closed and sealed. In addition, the weight of the case 129 is borne by the flange members 31.

Before the loading conveyor belt 38 ascends, an operator preliminarily sets a photovoltaic module onto the top surface of the loading conveyor belt 38.

In conjunction with the opening of the fourth-level laminating unit 125, the loading elevator device 40 raises the loading device 135 so that the surface of the loading belt 38 and the conveyance surface of the conveyor belt 127d of case 124 are flush. Similarly, the unloading elevator device 65 raises or lowers the unloading device 160 so that the top surface of the unloading belt 63 and the conveyance surface of the conveyor belt 127d of case 124 are flush.

Next, loading device 135 delivers the photovoltaic module that has been placed on the top surface of loading belt 38 to the conveyor device 127 of case 124.

In contrast, at the unloading device 160, in the case in which there is a laminated photovoltaic module set on the conveyor belt 127d of case 124, the photovoltaic module is accepted from the conveyor device 127 of the case 124. In addition, at the conveyor belt cleaning device 150, while the belt cleaning unit 51 is advancing, the belt cleaning unit 51 is rotating.

At case 124, while the conveyor device 127 is placing the not-yet-laminated photovoltaic module transferred from the loading device 135 into the middle of the laminating unit 125, in the case in which there is a laminated photovoltaic module, the laminated photovoltaic module is transferred to the unloading device 160. At this time, the belt cleaning unit 51 scrapes off any filler adhered to the conveyor surface.

Next, the opening and closing device 130 lowers the raised case 129 in order to close and seal the fourth-level laminating unit 125. It should be noted that the conveyor belt cleaning device 150 retracts the belt cleaning unit 51 in preparation for the next operation. After this operation, the photovoltaic module that has been set in the fourth-level laminating unit 125 is laminated.

At each laminating unit, after the lamination process has been completed, the laminated photovoltaic modules are successively unloaded and successively loaded, with the lamination process performed at each of the laminating units at will. It should be noted that the above described processing sequence is accomplished by control device, not shown, which controls the constituent elements of the laminator 200.In addition, because the filler in the photovoltaic modules that have been laminated in the laminator 200 is cross-linked, the unloaded photovoltaic modules can be transferred to the next post-process as needed.

According to the present embodiment, the vertically stacked plurality of laminating units can perform lamination in a mutually independent fashion. Therefore, since the laminating unit opens at will which has completed its lamination process for one photovoltaic module and that photovoltaic module is delivered and laminated, there is no need for large stocks of photovoltaic module before or after the lamination process, thus enabling the lead time required for photovoltaic module production to be shrunk and the amount of space needed for laminator installation to be reduced.

In addition, so that the plurality of vertically stacked laminating units can carry out lamination mutually independently, the laminating units can be opened and closed at will. Therefore, compared to opening and closing all the laminating units at the same time, the laminator 100 according to the present embodiment requires less overhead space, which in turn, allows more laminating units to be stacked and reduces the space required for the photovoltaic module production line. Furthermore, by adding more stacked laminating units, the production capacity of the laminator can be increased.

In addition, at the present embodiment, the conveyor belt is wound-up by a non-circulatory wind-up roller system. In addition, the release sheet is a fixed system. In this way, because the conveyor belt and the release sheet are constructed so as not to circulate, the space can be omitted for circulating the conveyor belt and the release sheet. Accordingly, because the lower chamber which the upper-level laminating unit composes, and the upper chamber which the lower-level laminating unit composes are configured such that they are single integrated into one case, the height dimensions of the laminator can be minimized.

It should be noted that although in the above-described embodiment a description is given of a 4-level construction of the laminating units, the present invention is not limited thereto. Thus, provided there are at least two levels, any number of levels may be employed. In addition, although in the present embodiment a description is given of complete-cross linking of the filler, again, the present invention is not limited thereto and is applicable also to a case in which the filler is half-crosslinked.

In addition, a description is given for the case in which the release sheet installed in the case is anchored, and not only applies in this case, but also where the release sheet is constructed to automatically wind-up in the same fashion as the conveyor belt or to manually wind-up.

In addition, at the first embodiment and at the second embodiment, a description is only given for the case where the loading device and the unloading device are provided, but is not limited to this case. Changing the loading device and unloading device, it also applies to when an unloading-loading device may be provided where the function of unloading the laminated photovoltaic module from the laminating unit and the function of delivering the not-yet-laminated photovoltaic module to the laminating unit are combined.

In addition, at the above stated first embodiment and second embodiment, a description is given in the case where only photovoltaic modules are laminated as the workpiece, and not only applies in this case, but also where other types of workpieces are laminated.

It should be noted that the exact terminology employed in the foregoing description is illustrative only, and used solely to facilitate comprehension of the present invention. Therefore, the present invention is not to be limited to the specific terms so selected. Moreover, it is to be understood that each specific element disclosed herein includes all equivalents thereof that operate in a similar manner and achieve a similar result.

As many widely different embodiments of the present invention can be made without departing from the scope thereof, it is to be understood that the invention is not limited to the specific embodiments thereof except as defined in the appended claims, which are to be given the widest permissible scope of interpretation consistent with the present disclosure.

## Claims

1. A laminator for laminating a workpiece comprising a plurality of vertically stacked laminating units,
each laminating unit comprising:
an upper case enclosing an upper chamber;
a lower case enclosing a lower chamber upon which the upper chamber can be set, the upper chamber and the lower chamber openably closable with respect to each other to form a substantially sealed space therebetween;
a heating plate disposed in the lower chamber upon which the workpiece is set; and
a pressing member disposed in the upper chamber above the heating plate,
the laminator further comprising opening and closing devices for opening and closing each of the laminating units one after another in succession,
the heating plate and the pressing member configured to press between them the workpiece set on the heating plate between the heating plate and the pressing member,
each laminating unit capable of perform laminating independently of the other laminating units.

2. The laminator according to claim 1, wherein the upper case of a given laminating unit and the lower case of a laminating unit stacked directly above the given laminating unit form a single integrated unit, and the opening and closing devices open and close the given laminating unit by respectively raising and lowering the single integrated unit.

3. The laminator according to claim 2, wherein the upper case of the given laminating unit is fixedly mounted on the lower case of the laminating unit stacked directly above the given laminating unit.

4. The laminator according to claim 1, further comprising a loading device to deliver the workpiece to the laminating units and a unloading device to remove the workpiece from the laminating units,
wherein the loading device and the unloading device are raised and lowered to positions corresponding to a laminating unit being opened or closed by the opening and closing devices.

5. The laminator according to claim 4, further comprising a conveyer belt disposed within the lower case between the heating plate and the pressing member for conveying a workpiece set on the heating plate and a drive device for driving the conveyer belt,
the loading device including a cleaning device for removing filler sediment adhering to a conveyance surface of the conveyer belt.

6. The laminator according to claim 5, wherein the conveyer belt circulates within the lower case.

7. The laminator according to claim 4, further comprising a release sheet disposed within the upper case between the pressing member and the workpiece,
the loading device and the unloading device each including a cleaning device for removing filler sediment adhering to a surface of the release sheet.

8. The laminator according to claim 7, wherein the release sheet is wound around rollers provided to the upper case.

9. The laminator according to claim 1, wherein the upper case of a given laminating unit and the lower case of a laminating unit stacked directly above the given laminating unit form a single integrated unit, and the opening and closing devices open and close the given laminating unit by respectively raising and lowering the case.

10. The laminator according to claim 9, further comprising a loading device to deliver the workpiece to the laminating units and a unloading device to remove the workpiece from the laminating units,
wherein the loading device and the unloading device are raised and lowered to positions corresponding to a laminating unit being opened or closed by the opening and closing devices.

11. The laminator according to claim 10, further comprising a conveyer belt disposed within the lower case between the heating plate and the pressing member for conveying a workpiece set on the heating plate and a drive device for driving the conveyer belt,
the loading device including a cleaning device for removing filler sediment adhering to a conveyance surface of the conveyer belt.

12. The laminator according to claim 1, further comprising a combined loading and unloading device for delivering a workpiece to the laminating units and removing the workpiece from the laminating units.

13. The laminator according to claim 9, further comprising a combined loading and unloading device for delivering a workpiece to the laminating units and removing the workpiece from the laminating units.

14. A laminator for laminating a workpiece comprising a plurality of vertically stacked laminating means,
each laminating means comprising:
an upper chamber;
a lower chamber upon which the upper chamber is set, the upper chamber and the lower chamber openably closable with respect to each other to form a substantially sealed space therebetween;
heating means disposed in the lower chamber upon which the workpiece is set; and
pressing means disposed in the upper chamber above the heating means,
the laminator further comprising opening and closing means for opening and closing each of the laminating means one after another in succession,
the heating means and the pressing means configured to press between them the workpiece set on the heating means between the heating means and the pressing means,
each laminating means capable of perform laminating independently of the other laminating means.
